# EUROPEAN PATENT SPECIFICATION

(11) **EP 4 481 668 B1**
(45) Date of publication and mention of the grant of the patent: **05.08.2026**
(21) Application number: 23775018.7
(22) Date of filing: 23.03.2023
(51) Int. Cl.: G06Q 10/20, G06F 16/783

(54) **INFORMATION PROCESSING METHOD, COMPUTER PROGRAM, AND INFORMATION PROCESSING DEVICE**
INFORMATIONSVERARBEITUNGSVERFAHREN, COMPUTERPROGRAMM UND INFORMATIONSVERARBEITUNGSVORRICHTUNG
PROCÉDÉ DE TRAITEMENT D´INFORMATIONS, PROGRAMME INFORMATIQUE ET DISPOSITIF DE TRAITEMENT D´INFORMATIONS

(30) Priority: 24.03.2022 JP 2022048871
(43) Date of publication of application: 25.12.2024
(73) Proprietor: DAIKIN INDUSTRIES, LTD., Osaka-shi, Osaka 530-0001 (JP); Fairy Devices Inc., Bunkyo-ku, Tokyo 113-0034 (JP)
(72) Inventor: SENATHI, Anishram, Osaka-shi, Osaka 530-0001 (JP); BHATIA, Vansh, Osaka-shi, Osaka 530-0001 (JP); PATRAWALA, Viraf, Osaka-shi, Osaka 530-0001 (JP); YOSHIDA, Naoki, Osaka-shi, Osaka 530-0001 (JP)
(74) Representative: Goddar, Heinz J.
(86) International application number: PCT/JP2023/011496
(87) International publication number: WO 2023/182424

(56) References cited:
- JP-A- 2002 063 296
- JP-A- 2016 206 905
- JP-A- 2019 032 593
- JP-A- 2021 157 310
- JP-B1- 7 023 427
- US-A1- 2017 078 767
- US-A1- 2019 045 158
- US-A1- 2021 064 882

## Description

### Technical Field

The present invention relates to an information processing method, a computer program, and an information processing apparatus that handle a moving image obtained by capturing work such as repair or installation.

### Background Art

For example, work such as repair or installation for air conditioner units requests a worker for predetermined techniques, skills, or the like. There may be a large difference in time required to complete the work, depending on whether the work is performed by a skilled worker or an unskilled worker. These techniques, skills, and the like of workers need to be inherited from skilled workers to unskilled workers.

PTL 1 proposes a system for providing after-sales service/maintenance information of a product via the Internet or the like. In this system, a supplier of a product is induced to input: search information including supplier information such as the supplier name and contact information and product information such as the generic name and manufacturing date of the product; and the after-sales service/maintenance information. Information that is a combination of such search information and after-sales service/maintenance information is provided to an information receiver in a searchable manner. US 2019/045158 A1 discloses an information processing method according to the preamble of claim 1 and an information processing apparatus according to the preamble of claim 13. Other relevant prior art are JP2021157310A, JP7023427B, US2021/064882 A1, US2017/078767A.

### Citation List

### Patent Literature

PTL 1: Japanese Unexamined Patent Application Publication No. 2001-297099

### Summary of Invention

### Technical Problem

For the inheritance of the techniques, the skills, or the like, for example, it is conceivable to collect and accumulate moving images obtained by capturing how a skilled worker performs the work, and to provide the accumulated moving images to an unskilled worker. However, it is not easy for the unskilled worker to find a necessary moving image from a large number of accumulated moving images, and it is not easy to identify a scene, in the moving image, in which desired work is captured. While it is described in PTL 1 that a moving image may be included in the after-sales service/maintenance information to be provided, the system described in PTL 1 does not facilitate a search for a moving image.

An object of the present invention is to provide an information processing method, a computer program, and an information processing apparatus with which handling of a moving image obtained by capturing work such as repair or installation can be assisted.

### Solution to Problem

The present invention provides an information processing method according to claim 1, an information processing method according to claim 6, a computer program according to claim 11, a computer program according to claim 12, an information processing apparatus according to claim 13 and an information processing apparatus according to claim 14.

According to an embodiment, it is expected that handling of a moving image obtained by capturing work such as repair or installation can be assisted.

### Brief Description of Drawings

[Fig. 1] Fig. 1 is a schematic view for explaining an overview of an information processing system according to the present embodiment.
[Fig. 2] Fig. 2 is a block diagram illustrating a configuration of a server apparatus according to the present embodiment.
[Fig. 3] Fig. 3 is a block diagram illustrating a configuration of a terminal device according to the present embodiment.
[Fig. 4] Fig. 4 is a flowchart illustrating a procedure of digest moving image and search information generation processing executed by the server apparatus according to the present embodiment.
[Fig. 5] Fig. 5 is a schematic view illustrating an example of a result of detection of a landmark by a hand detection unit.
[Fig. 6] Fig. 6 is a schematic view illustrating an example of a result of detection of a moving object by a tool detection unit.
[Fig. 7] Fig. 7 is a schematic view for explaining a method of detecting a tool by the tool detection unit.
[Fig. 8] Fig. 8 is a schematic view for explaining a method of detecting a work point by a work target detection unit.
[Fig. 9] Fig. 9 is a schematic view for explaining a method of detecting a work target.
[Fig. 10] Fig. 10 is a schematic view for explaining a configuration example of a moving image DB.
[Fig. 11] Fig. 11 is a schematic view illustrating an example of a scene selection screen for a moving image provided by the terminal device.
[Fig. 12] Fig. 12 is a schematic view illustrating a display example of a moving image provided by the terminal device.
[Fig. 13] Fig. 13 is a flowchart illustrating a procedure of processing for searching for and displaying a moving image executed by the terminal device according to the present embodiment.
[Fig. 14] Fig. 14 is a flowchart illustrating a procedure of processing for searching for and displaying a moving image executed by the server apparatus according to the present embodiment.
[Fig. 15] Fig. 15 is a schematic view for explaining an overview of an information processing system according to a second embodiment.
[Fig. 16] Fig. 16 is a block diagram illustrating a configuration of a server apparatus according to the second embodiment.
[Fig. 17] Fig. 17 is a schematic view for explaining a configuration example of a moving image DB according to the second embodiment.
[Fig. 18] Fig. 18 is a block diagram illustrating a configuration of a worker terminal device according to the second embodiment.
[Fig. 19] Fig. 19 is a flowchart illustrating a procedure of processing executed by the worker terminal device according to the second embodiment.
[Fig. 20] Fig. 20 is a flowchart illustrating a procedure of processing executed by the server apparatus according to the second embodiment.
[Fig. 21] Fig. 21 is a schematic view for explaining processing executed when the server apparatus stores a representative value of a measurement result in a database.
[Fig. 22] Fig. 22 is a schematic view for explaining processing executed when the server apparatus stores a representative value of a measurement result in the database.

### Description of Embodiments

Specific examples of an information processing system according to embodiments of the present invention will be described below with reference to the drawings. Note that the present invention is not limited to these examples, but is indicated by the scope of the claims, and is intended to include all modifications within the meaning and scope equivalent to the scope of the claims.

### [First embodiment]

### <System configuration>

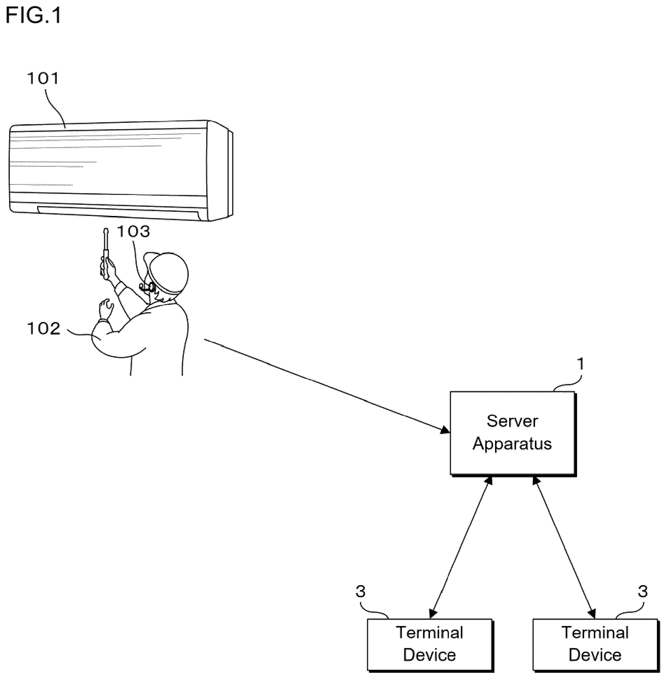

Fig. 1 is a schematic view for explaining an overview of an information processing system according to the present embodiment. In the information processing system according to the present embodiment, a worker 102 who performs work such as installation or repair for an air conditioner unit 101 captures an image of the work he or she is performing, using a camera 103 provided in a headset or the like worn on the head of the worker. In the present embodiment, it is assumed that the image is captured by using the camera 103 provided to a wearable device such as a headset worn by the worker 102. However, the present disclosure is not limited thereto, and the image of the work may be captured using the camera 103 provided around the air conditioner unit 101 and the worker 102.

A moving image captured by the camera 103 is provided to a server apparatus 1. The server apparatus 1 acquires moving images captured by one or a plurality of workers and accumulates the acquired moving images in a database. As a method of providing the moving images from the camera 103 to the server apparatus 1, for example, when the camera 103 has a communication function, a method of directly transmitting the moving images from the camera 103 to the server apparatus 1 by wired or wireless communication can be adopted. When the camera 103 does not have the communication function, for example, the camera 103 can record a moving image in a recording medium such as a memory card or an optical disc, and can provide the moving image to the server apparatus 1 via the recording medium. Further, for example, a terminal device such as a personal computer (PC) or a smartphone may be interposed between the camera 103 and the server apparatus 1, and the terminal device may acquire a moving image from the camera 103 and transmit the moving image to the server apparatus 1. Any method may be adopted as a method of providing a moving image from the camera 103 to the server apparatus 1.

The server apparatus 1 can communicate with one or a plurality of terminal devices 3 via a network such as a local area network (LAN) or the Internet. The terminal device is, for example, a general-purpose information processing apparatus such as a PC or a smartphone, and in the present embodiment, for example, is used by an unskilled user who learns work such as installation or repair for the air conditioner unit 101 to watch a moving image obtained by capturing the work performed by a skilled worker. Based on a request from the terminal device 3, the server apparatus 1 acquires a desired moving image from a plurality of moving images stored in the database and transmits the desired moving image to the terminal device 3. The terminal device 3 displays (plays) the moving image received from the server apparatus 1.

The server apparatus 1 according to the present embodiment provides a moving image search system to a user in order to assist the user in selecting and watching a desired moving image from a large number of moving images accumulated in the database. The server apparatus 1 receives an input from a user using information on a tool used for work such as repair or installation for the air conditioner unit 101 as a search condition (first condition) for a moving image. As the information on the tool, for example, the name of the tool such as a screwdriver, a hex wrench, a torque wrench, a copper pipe cutter, or a file may be used. In addition, the server apparatus 1 receives an input from the user using information on a work target as a search condition (second condition) for the moving image. As the information on the work target, for example, the name of equipment or a part thereof that is the work target such as an air conditioner, an indoor unit, an outdoor unit, a humidifier, a dehumidifier, a duct, or a pump may be used.

Based on the tool and work target related search conditions input by the user, the server apparatus 1 extracts a moving image corresponding to the search conditions from a plurality of moving images accumulated in the database, and transmits information (for example, a file name, a title character string, a capturing date and time, a running time, or a thumbnail image) related to the extracted moving image to the terminal device 3 as a search result. The terminal device 3 displays the information on the search result received from the server apparatus 1 and receives the selection of the moving image to be played from the user. The terminal device 3 issues a transmission request for the moving image selected by the user to the server apparatus 1, and the server apparatus 1 reads the requested moving image from the database and transmits it to the terminal device 3. The terminal device 3 receives the moving image transmitted from the server apparatus 1, and plays and displays the received moving image. The moving image may be played by a so-called streaming method in which the transmission and reception of the moving image and the playing of the moving image proceed in parallel.

In order to implement the search for the moving image described above, the server apparatus 1 performs processing of detecting the tool and the work target captured in the moving image at the timing of or after the acquisition of the moving image captured by the camera 103. The server apparatus 1 stores, in the database, information on the tool and the work target detected, and information such as the time during which the tool and the work target detected appear in the entire running time of the moving image, in association with the moving image. The server apparatus 1 can extract a moving image corresponding to the search conditions from the database by acquiring the search conditions input by the user from the terminal device 3 and referring to the information.

Thus, for example, by inputting "torque wrench" as the tool related search condition and inputting "outdoor unit" as the work target related search condition, the user can extract a moving image obtained by capturing how work such as installation or repair for an outdoor unit is done using a torque wrench from a large number of moving images accumulated in the database of the server apparatus 1, and play and watch the desired moving image, from the moving images, on the terminal device 3.

In the information processing system according to the present embodiment, the moving image captured by the camera 103 of the wearable device worn by the worker 102 can be a moving image with a long running time including all the work from the start to the end of the work such as installation or repair for the air conditioner unit 101. Therefore, based on a moving image captured by the camera 103, the server apparatus 1 according to the present embodiment performs processing of generating a digest moving image (summary moving image) of the moving image. The server apparatus 1 extracts (cuts out) one or a plurality of partial moving images from the moving image captured by the camera 103 and connects the partial moving images to generate the digest moving image with a shorter running time than the original moving image.

When generating the digest moving image, the server apparatus 1 according to the present embodiment executes processing of detecting a hand of a person (such as a worker) from the moving image captured by the camera 103. The server apparatus 1 extracts partial moving images in which the detected hand is captured from the original moving image, and generates the digest moving image by connecting the partial moving images thus extracted. In the moving image captured by the camera 103, a scene in which the worker is actually performing the work is important, and the hand of the worker is likely to be captured in the scene in which the worker is actually performing the work. Since the server apparatus 1 generates the digest moving image by extracting scenes in which a hand is captured from the moving image captured by the camera 103 as partial moving images, the scenes in which the worker is actually performing the work are expected to be collected in the digest moving image.

The digest moving image generated by the server apparatus 1 according to the present embodiment may include a scene in which a hand is not captured. For example, scenes within a predetermined time before and after a scene in which a hand is captured may be included in the digest moving image. Further, for example, when a scene in which a hand is not captured exists between two scenes in which the hand is captured, and the running time of the scene in which the hand is not captured is equal to or shorter than a predetermined time, this scene may be included in the digest moving image.

Further, the server apparatus 1 may generate the digest moving image by extracting, for example, a scene in which a tool is captured, a scene in which a certain tool is captured, a scene in which a work target is captured, a scene in which a certain work target is captured, a scene in which a certain tool and a work target are captured, or the like instead of a scene in which a hand is captured. The server apparatus 1 may generate a plurality of digest moving images under different extraction conditions based on one moving image.

### <Apparatus configuration>

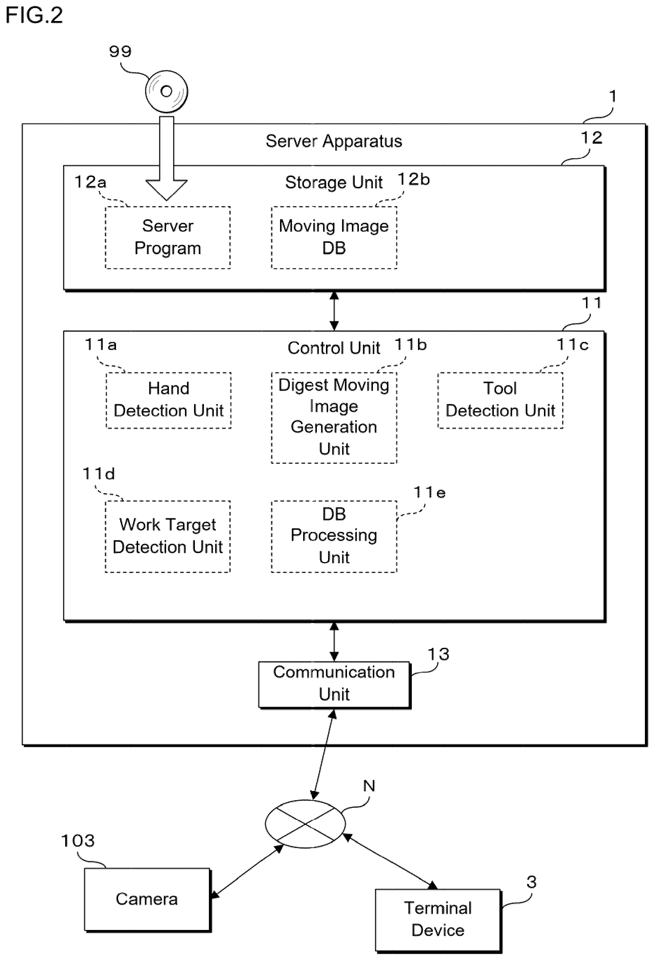

Fig. 2 is a block diagram illustrating a configuration of the server apparatus 1 according to the present embodiment. The server apparatus 1 according to the present embodiment includes a control unit 11, a storage unit (storage) 12, a communication unit (transceiver) 13, and the like. In the present embodiment, it is assumed that the processing is executed by a single server apparatus, but the processing may be executed by a plurality of server apparatuses in a distributed manner. For example, the server apparatus 1 may include two apparatuses, namely, a server apparatus that extracts the search information from a moving image captured by the camera 103 and generates a digest, and a server apparatus that provides a moving image stored in a database to the terminal device 3 of the user.

The control unit 11 is configured using a calculation processing device such as a central processing unit (CPU), a micro-processing unit (MPU), a graphics processing unit (GPU), or a quantum processor, a read only memory (ROM), a random access memory (RAM), and the like. The control unit 11 reads and executes a server program 12a stored in the storage unit 12, thereby executing various types of processing such as processing of detecting hands, tools, work targets, and the like in a moving image captured by the camera 103, processing of generating a digest moving image based on a detection result, and processing of extracting a moving image corresponding to a search condition given from the terminal device 3.

The storage unit 12 is configured using, for example, a large-capacity storage device such as a hard disk. The storage unit 12 stores various types of programs to be executed by the control unit 11 and various types of data required for the processing by the control unit 11. In the present embodiment, the storage unit 12 stores the server program 12a executed by the control unit 11. In addition, the storage unit 12 is provided with a moving image database (DB) 12b in which moving images captured by the camera 103 are accumulated.

In the present embodiment, the server program (program product) 12a is provided in a form recorded in a recording medium 99 such as a memory card or an optical disc, and the server apparatus 1 reads the server program 12a from the recording medium 99 and stores the server program 12a in the storage unit 12. Alternatively, the server program 12a may be written in the storage unit 12 at the manufacturing stage of the server apparatus 1, for example. Further, for example, the server program 12a distributed by another server apparatus at a remote location or the like may be acquired by the server apparatus 1 through communication. For example, a writing device may read the server program 12a recorded in the recording medium 99 and write the program in the storage unit 12 of the server apparatus 1. The server program 12a may be provided in a form of distribution via a network, or may be provided in a form recorded in the recording medium 99.

The moving image DB 12b is a database that stores a moving image captured by the camera 103, a digest moving image generated by the server apparatus 1 from the moving image, and the like. In addition, the moving image DB 12b stores, in association with these moving images, information on the tools and the work targets captured in the moving images.

The communication unit 13 communicates with various devices via a network N including a mobile phone communication network, a wireless local area network (LAN), the Internet, and the like. In the present embodiment, the communication unit 13 communicates with one or a plurality of terminal devices 3 and the camera 103 via the network N. The communication unit 13 transmits data provided from the control unit 11 to another device, and provides data received from another device to the control unit 11.

Note that the storage unit 12 may be an external storage device connected to the server apparatus 1. The server apparatus 1 may be a multi-computer including a plurality of computers, or may be a virtual machine virtually constructed by software. The server apparatus 1 is not limited to the above-described configuration, and may include, for example, a reading unit that reads information stored in a portable storage medium, an input unit that receives an operation input, a display unit that displays an image, and the like.

In addition, in the server apparatus 1 according to the present embodiment, the control unit 11 reads and executes the server program 12a stored in the storage unit 12, to implement a hand detection unit 11a, a digest moving image generation unit 11b, a tool detection unit 11c, a work target detection unit 11d, a DB processing unit 11e, and the like as software functional parts in the control unit 11. In the figure, functional parts related to moving images are illustrated as the functional parts of the control unit 11, and functional parts related to other processing are omitted.

The hand detection unit 11a performs processing of detecting a hand of a person captured in a moving image captured by the camera 103. The moving image obtained by capturing by the camera 103 includes about several tens of frames (still images) per second combined, and the hand detection unit 11a detects a hand for each frame in the moving image. Alternatively, the hand detection unit 11a may not perform the processing of detecting a hand for all the frames in the moving image, and may perform the processing of detecting a hand with frames selected at a reduced frequency, that is, once a second, for example. The hand detection unit 11a performs the processing of detecting a hand captured in a frame in a moving image using, for example, so-called artificial intelligence (AI), which is a learning model for which machine learning has been performed in advance. As the learning model of the hand detection unit 11a, for example, a learning model such as a deep neural network (DNN), a convolutional neural network (CNN), a fully convolutional network (FCN), SegNet, U-Net, or BlazePalm may be employed. For the learning model used by the hand detection unit 11a in the present embodiment, machine learning is performed in advance such that, for example, when a still image is received as an input, information indicating whether what is captured in each pixel of this image is a hand of a person is output. In the present embodiment, it is assumed that the hand detection unit 11a performs the processing of detecting a hand of a person from an image using a learning model for which machine learning has been performed in advance. However, the present disclosure is not limited thereto, and a hand of a person may be detected from an image by a method not using a learning model.

Further, in the present embodiment, the hand detection unit 11a performs processing of detecting a specific part, that is, a so-called landmark, of the detected hand, such as fingertips and joints. The hand detection unit 11a detects a specific part of the hand using a learning model for which machine learning has been performed in advance. As the learning model, for example, a learning model such as DNN, CNN, mediapipe, or OpenPose may be employed. This learning model receives, for example, a still image as an input, detects a predetermined number of specific parts of a hand captured in this image, and outputs coordinates of the detected specific parts. Note that the information on the landmarks of the hand detected by the hand detection unit 11a is used for the processing of detecting a work target described below. A detailed configuration, a training method, and the like of the learning model related to the detection of a hand are existing techniques, and thus a detailed description thereof will be omitted.

The digest moving image generation unit 11b performs processing of generating a digest moving image from moving images captured by the camera 103 based on the result of detecting the hand by the hand detection unit 11a. The digest moving image generation unit 11b extracts the frames in which the hand is detected from the frames in the moving image, and generates a digest moving image by connecting the extracted frames. In the present embodiment, it is assumed that the following processing of detecting tools and detecting work targets is performed on the digest moving image generated by the digest moving image generation unit 11b, but the present disclosure is not limited thereto, and such processing may be performed on original images.

The tool detection unit 11c performs processing of detecting, in the digest moving image generated by the digest moving image generation unit 11b, a tool captured in the moving image based on the result of detecting the hand by the hand detection unit 11a. The tool detection unit 11c detects an image region in which a moving object is captured in the moving image by comparing two time-sequentially successive frames among a plurality of frames in the moving image. Next, the tool detection unit 11c sets a portion obtained by excluding an image region corresponding to the hand detected by the hand detection unit 11a from the image region in which the moving object is captured as an image region in which a tool is captured. The tool detection unit 11c detects an image region in which a tool is captured for each frame, and outputs information indicating whether what is captured in each pixel of the frame is a tool.

The work target detection unit 11d performs processing of detecting, as a work target, a target of work such as installation or repair from the digest moving image generated by the digest moving image generation unit 11b. Unlike the hand detection unit 11a and the tool detection unit 11c, the work target detection unit 11d does not detect the work target for each frame in the moving image, but detects the work target for the entire moving image or for each scene included in the moving image. First, the work target detection unit 11d selects frames in which a hand or a tool is detected based on the detection results of the hand detection unit 11a and the tool detection unit 11c, and detects a work point of the hand or tool in each frame. The work target detection unit 11d aggregates information on work points detected in a plurality of frames for the entire moving image or for each scene in the moving image, and identifies an image region as the work target.

The DB processing unit 11e stores the digest moving image generated by the digest moving image generation unit 11b, the information on the tool detected by the tool detection unit 11c, and the information on the work target detected by the work target detection unit 11d, in the moving image DB 12b of the storage unit 12 in association with the original moving image. In addition, the DB processing unit 11e acquires a search condition input by the user using the terminal device 3, extracts a moving image corresponding to the search condition from the moving image DB 12b, and transmits list information of the extracted moving image and the like to the terminal device 3 as a search result. The DB processing unit 11e receives a request to play a moving image from the terminal device 3, reads data of the moving image requested to be played from the moving image DB 12b, and transmits the read data of the moving image to the terminal device 3 from which the request has been issued.

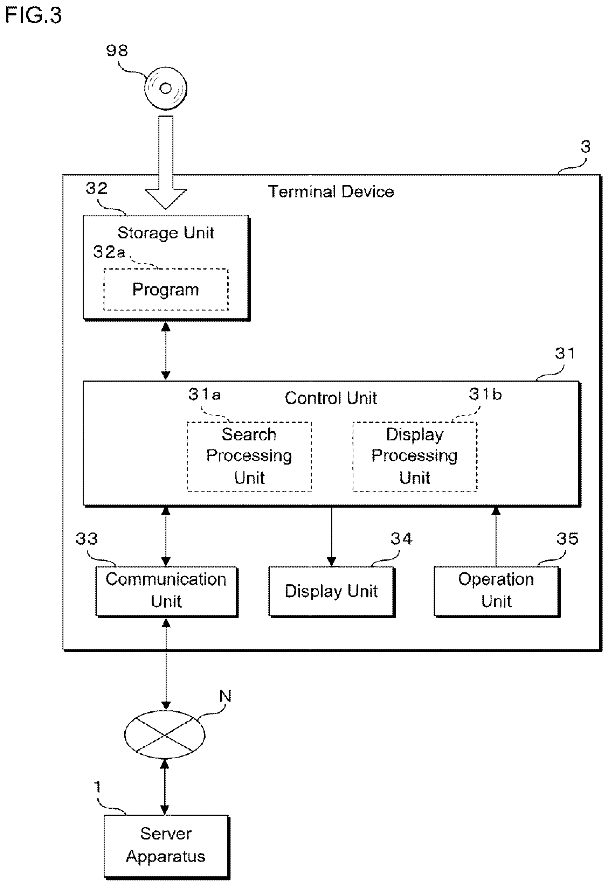

Fig. 3 is a block diagram illustrating a configuration of the terminal device 3 according to the present embodiment. The terminal device 3 according to the present embodiment is configured to include a control unit 31, a storage unit (storage) 32, a communication unit (transceiver) 33, a display unit (display) 34, an operation unit 35, and the like. The terminal device 3 is, for example, a device used by a user such as an unskilled worker who learns the technique of installation, repair, or the like for the air conditioner unit 101, and may be configured using, for example, an information processing apparatus such as a smartphone, a tablet terminal device, or a personal computer.

The control unit 31 is configured using a calculation processing device such as a CPU or an MPU, a ROM, and the like. By reading and executing a program 32a stored in the storage unit 32, the control unit 31 performs processing such as processing of searching for moving images accumulated in the moving image DB 12b of the server apparatus 1 and processing of displaying (playing) these moving images.

The storage unit 32 is configured by using, for example, a nonvolatile memory element such as a flash memory and the like or a storage device such as a hard disk. The storage unit 32 stores various types of programs to be executed by the control unit 31 and various types of data required for processing by the control unit 31. In the present embodiment, the storage unit 32 stores the program 32a to be executed by the control unit 31. In the present embodiment, the program 32a is distributed by a remote server apparatus or the like, and the terminal device 3 acquires the program 32a through communication and stores the program 32a in the storage unit 32. However, the program 32a may be written in the storage unit 32 at the manufacturing stage of the terminal device 3, for example. For example, the terminal device 3 may read the program 32a recorded in a recording medium 98 such as a memory card or an optical disc and store the program 32a in the storage unit 32. For example, a writing device may read the program 32a recorded in the recording medium 98, and write the program in the storage unit 32 of the terminal device 3. The program 32a may be provided in a form of distribution via a network, or may be provided in a form recorded in the recording medium 98.

The communication unit 33 communicates with various devices via the network N including a mobile phone communication network, a wireless LAN, the Internet, and the like. In the present embodiment, the communication unit 33 communicates with the server apparatus 1 via the network N. The communication unit 33 transmits data provided from the control unit 31 to another device, and provides data received from another device to the control unit 31.

The display unit 34 is configured using a liquid crystal display or the like, and displays various images, characters, and the like based on the processing performed by the control unit 31. The operation unit 35 receives a user operation and notifies the control unit 31 of the received operation. For example, the operation unit 35 receives a user operation through an input device such as a mechanical button or a touch panel provided on the surface of the display unit 34. Further, for example, the operation unit 35 may be input devices such as a mouse and a keyboard, and these input devices may be configured to be detachable from the terminal device 3.

In addition, in the terminal device 3 according to the present embodiment, the control unit 31 reads and executes the program 32a stored in the storage unit 32, to implement a search processing unit 31a, a display processing unit 31b, and the like as software functional parts in the control unit 31. The program 32a may be a program dedicated to the information processing system according to the present embodiment, or may be a general-purpose program such as an Internet browser or a web browser.

The search processing unit 31a receives, from a user, an input of a search condition related to a tool and a search condition related to a work target as conditions for searching for a moving image. The search processing unit 31a transmits the input search conditions to the server apparatus 1, and receives, from the server apparatus 1, information on a moving image extracted from the moving image DB 12b under the search conditions. In addition, for example, the search processing unit 31a receives selection of a moving image to be played from a list of moving images corresponding to the search conditions, and transmits a play request for the selected moving image to the server apparatus 1.

The display processing unit 31b executes display processing such as displaying a screen for receiving an input of search conditions, displaying information transmitted as a search result from the server apparatus 1, and playing (displaying) a moving image.

### <Digest moving image and search information generation processing>

In the information processing system according to the present embodiment, the server apparatus 1 acquires a moving image obtained by the camera 103 capturing work such as installation or repair for the air conditioner unit 101, and the server apparatus 1 stores and accumulates the acquired moving image in the moving image DB 12b. In this processing, the server apparatus 1 generates information, so-called index information, for searching for the moving image, and generates a digest moving image of the moving image. Processing of generating search information and processing of generating a digest moving image executed by the server apparatus 1 will be described below.

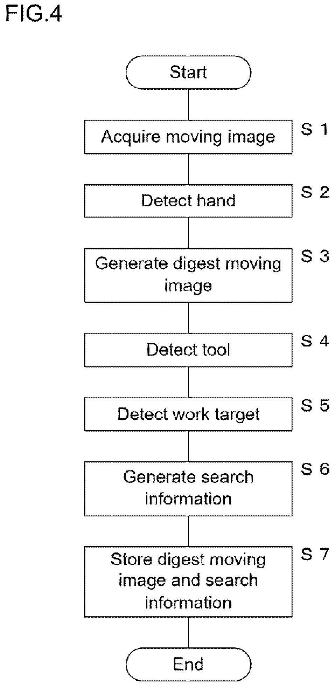

Fig. 4 is a flowchart illustrating a procedure of digest moving image and search information generation processing executed by the server apparatus 1 according to the present embodiment. The control unit 11 of the server apparatus 1 according to the present embodiment communicates with the camera 103 through the communication unit 13, for example, and receives a moving image transmitted from the camera 103, thereby acquiring the moving image captured by the camera 103 (step S1).

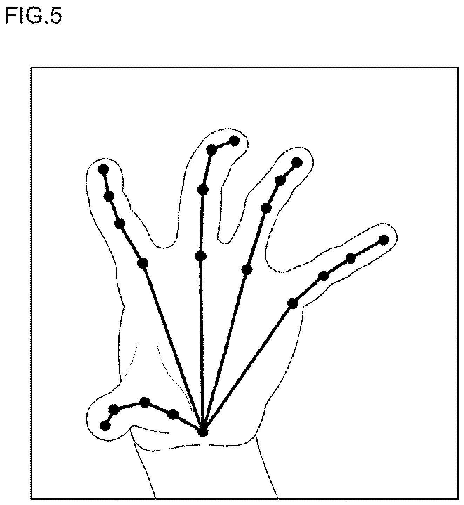

Next, the hand detection unit 11a of the control unit 11 executes the processing of detecting a hand of a person for each frame in the moving image acquired in step S1 (step S2). In this processing, the hand detection unit 11a detects a hand of a person from each frame in the moving image using a trained learning model for which machine learning has been performed in advance. In the present embodiment, the hand detection unit 11a detects an image region in which a hand is captured in each frame and a landmark such as a fingertip and a joint of this hand. Fig. 5 is a schematic view illustrating an example of a result of detecting the landmarks by the hand detection unit 11a. For the hand of the person captured in the frame, the hand detection unit 11a estimates a certain position such as a fingertip and a joint of the hand to be the landmark for example, and outputs the estimated position as two dimensional coordinates in a still image of the frame. The number of landmarks detected by the hand detection unit 11a is about 20 to 30 for one hand. In Fig. 5, the landmarks detected by the hand detection unit 11a are indicated by black dots, and the landmarks are connected by solid lines to indicate the shape of the hand and the like.

Next, the digest moving image generation unit 11b of the control unit 11 performs the processing of generating a digest moving image from the moving image acquired in step S1, based on the result of the detection of the hand of the person performed in step S2 (step S3). In the present embodiment, the digest moving image generation unit 11b extracts parts in which the hand is detected by the hand detection unit 11a from the entire moving image captured by the camera 103, and generates a digest moving image by combining the extracted partial moving images. In this processing, if there is a partial moving image in which the hand is not detected and that is shorter than a predetermined time between two partial moving images in which the hand is detected, for example, the digest moving image generation unit 11b may connect the partial moving image with the preceding and subsequent partial moving images and include the resultant image in the digest moving image. In addition, the digest moving image generation unit 11b may include, in the digest moving image, partial moving images in which the hand is not captured within a predetermined time before and after the partial moving image in which the hand is captured. When the partial moving image, in which the hand is not detected, between the two partial moving images in which the hand is detected is longer than the predetermined time, the digest moving image generation unit 11b may divide the digest moving image into two, that is, before and after the partial moving image in which the hand is not detected, and thus may generate a plurality of digest moving images from one moving image.

Next, the tool detection unit 11c of the control unit 11 executes the processing of detecting, from the digest moving image generated by the digest moving image generation unit 11b in step S3, a tool captured in this moving image (step S4). In the present embodiment, the tool detection unit 11c detects, as a tool, an object held by a hand of a person performing work such as installation or repair, and does not detect tools that are not used for the work, for example, tools placed on a table. In addition, for example, an object such as a part removed from the air conditioner unit 101, that is held and moved by the worker using his or her hands, is regarded as a tool to be detected by the tool detection unit 11c in the present embodiment. Thus, the tool detection unit 11c according to the present embodiment does not regard "tools" as general industrial products, but regards an object held by the worker using his or her hands as the tool.

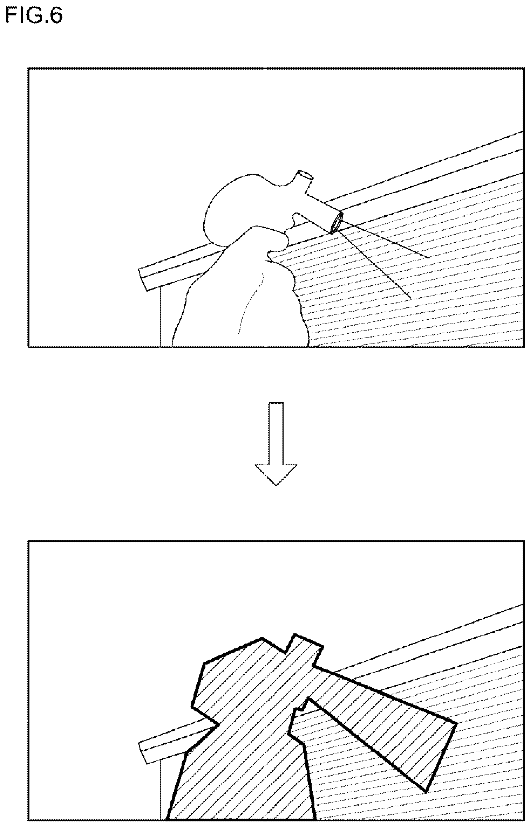

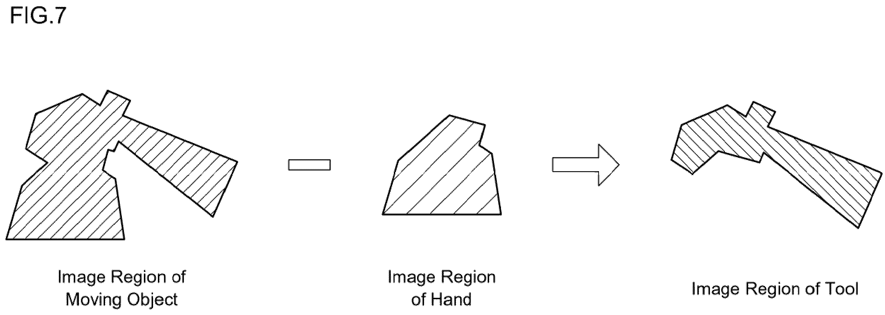

For a plurality of frames included in the moving image (digest moving image), the tool detection unit 11c compares two successive frames in time series. For example, the tool detection unit 11c can determine that a portion in which a difference in pixel values between two frames exceeds a threshold is a region in which an object moved between the two frames is captured. Fig. 6 is a schematic view illustrating an example of a result of detecting a moving object by the tool detection unit 11c. One frame (still image) of the moving image captured by the camera 103 is illustrated on the upper side of Fig. 6, and a region of the moving object detected by the tool detection unit 11c from this frame is illustrated as a hatched region on the lower side of Fig. 6. Fig. 7 is a schematic view for explaining a method of detecting a tools by the tool detection unit 11c. The tool detection unit 11c removes the image region of the hand detected in the frame by the hand detection unit 11a in step S1 from the image region of the moving object detected in the frame in the moving image, and sets the resultant region as the image region in which the tool is captured. The tool detection unit 11c outputs information indicating the image region in which the tool is captured for each frame, for example, information indicating whether each pixel of the frame corresponds to the tool.

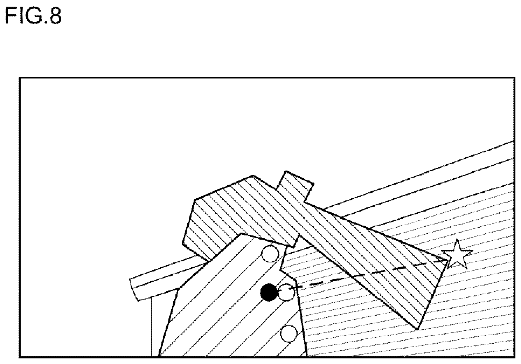

Next, the work target detection unit 11d of the control unit 11 executes the processing of detecting, in the digest moving image generated by the digest moving image generation unit 11b in step S3, a work target captured in this moving image (step S5). The work target detection unit 11d detects an object existing in front of the detected hand or tool as the work target. The work target detection unit 11d executes the processing of detecting a position (work point) at which work is performed by a hand of a person or a tool, in a frame in which the hand or the tool is detected. Fig. 8 is a schematic view for explaining a method of detecting a work point by the work target detection unit 11d.

In the example illustrated in Fig. 8, the work target detection unit 11d according to the present embodiment acquires the positions of fingertips from the landmark detected by the hand detection unit 11a for the hand detected in the frame, and calculates the center position of the positions of a plurality of the fingertips. The positions of the fingertips are indicated by white dots, and the center position thereof is indicated by a black dot. The work target detection unit 11d identifies a point farthest from the center position of the fingertips in the image region of the tools detected from the frame, and stores the coordinate information of the identified point as a work point. In the example illustrated in Fig. 8, the farthest point from the center position of the fingertips is indicated by a star mark.

For the frame in which the tool is not detected and the hand is detected, the work target detection unit 11d does not identify a work point by the above-described method, and identifies a work point by another method. The work target detection unit 11d acquires the positions of fingertips of the hand for the frame in which the tool is not detected, calculates the center position of a plurality of the acquired fingertip positions, and sets the calculated center position as the work point.

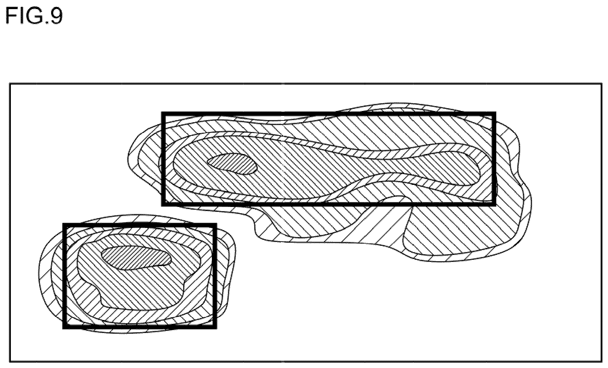

The work target detection unit 11d executes processing of identifying a work point for all frames in which a hand or a tool is detected. The work target detection unit 11d aggregates work points identified in the frames for the entire moving image or for each scene in a case where the moving image is divided into a plurality of scenes or the like, and sets, for example, a portion with a high frequency of identification of the work point as a work target. Fig. 9 is a schematic view for explaining a method of detecting a work target. The illustrated example is an image in which the frequency of identification of a work point is color-coded for one moving image (or a scene or the like). A light color (white) portion is a portion having a low frequency of identification of the work point, and a dark color (black) portion is a portion with a high frequency of identification of the work point. The work target detection unit 11d sets, for example, a rectangular region surrounding a portion where the frequency exceeds a predetermined threshold as the work target. In the illustrated example, two regions are detected as the work target.

Next, the DB processing unit 11e of the control unit 11 executes the processing of generating search information (index information) for searching for the moving image based on the result of the detection of the tool in step S4 and the result of the detection of the work target in step S5 (step S6). The DB processing unit 11e determines the type or the like of one or a plurality of tools appearing in the moving image based on the result of the detection of the tool, and checks a time zone (for example, from 1 minute 15 seconds to 3 minutes 30 seconds) in which each of the tools appears in the entire running time of the moving image. The type of the tool captured in the moving image can be determined by using, for example, a learning model for which machine learning has been performed in advance. As the learning model, for example, a model for which machine learning has been performed in advance so as to output a classification result of the type of a tool, in response to an input of an image of the tool is used.

Similarly, the DB processing unit 11e determines the type or the like of one or a plurality of work targets appearing in the moving image based on the result of the detection of the work target, and checks the time zone in which each of the work targets appears in the entire running time of the moving image. The type of the work target captured in the moving image can be determined using, for example, a learning model for which machine learning has been performed in advance. As the learning model, for example, a model for which machine learning has been performed in advance so as to output a classification result of the type of a work target, in response to an input of an image of the work target is used.

Next, the DB processing unit 11e stores, in the moving image DB 12b, information such as the type and appearing time zone of the tool and work target appearing in the moving image, the digest moving image generated from the moving image, and the original moving image in association with each other (step S7), and ends the processing. In the present embodiment, these pieces of information and moving images are stored in one database, but the present disclosure is not limited thereto, and these pieces of information and moving images may be distributed and stored in a plurality of databases.

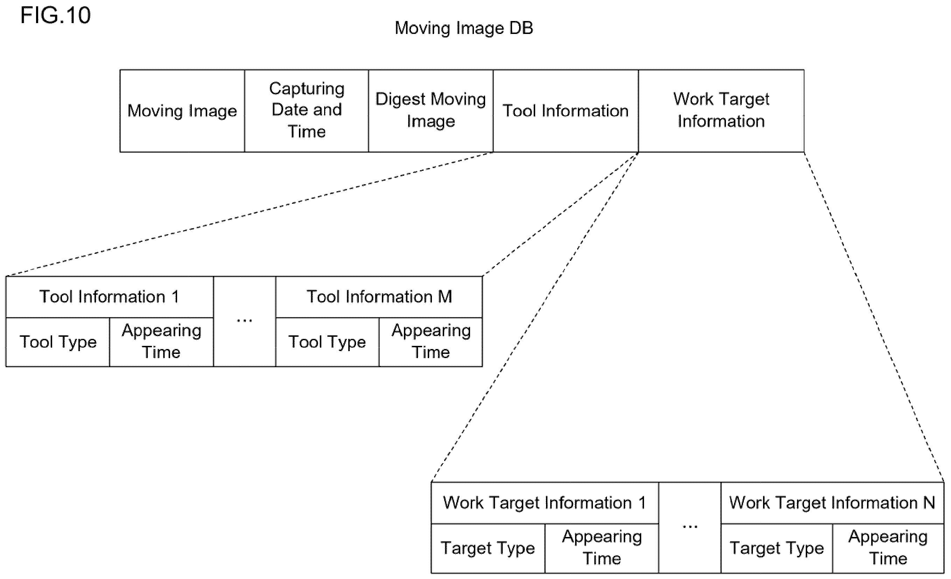

Fig. 10 is a schematic view for explaining a configuration example of the moving image DB 12b. In the present embodiment, in the moving image DB 12b provided in the server apparatus 1, "moving image", "capturing date and time", "digest moving image", "tool information", "work target information", and the like are stored in association with each other. The "moving image" is a moving image captured by the camera 103. Data of the moving image itself may be stored, or information indicating a file name or a storage location of the moving image and the like may be stored. The "capturing date and time" is information on the date and time when the moving image is captured. For example, the camera 103 provides the moving image to the server apparatus 1 with the information on the capturing date and time, and the server apparatus 1 stores the information on the capturing date and time provided from the camera 103 in association with the moving image. The "digest moving image" is a moving image generated by the server apparatus 1 based on the detection result of the hand based on the moving image. As the "digest moving image", data of the digest moving image itself may be stored, or information indicating a file name or a storage location of the digest moving image and the like may be stored.

The "tool information" is information on one or a plurality of tools detected in the moving image (digest moving image) by the server apparatus 1. In this example, the "tool information" of the moving image DB 12b may include information on M tools from tool information 1 to tool information M. Each of the pieces of tool information 1 to M may include information on the "type" of the tool and the "appearing time" related to the time at which the tool appears in the moving image. The "work target information" is information on one or a plurality of work targets detected in the moving image by the server apparatus 1. In this example, the "work target information" of the moving image DB 12b may include information on N work targets from work target information 1 to work target information N. Each of the pieces of work target information 1 to N may include information on the "type" of the work target and the "appearing time" related to the time at which the work target appears in the moving image.

### <Moving image search processing>

In the information processing system according to the present embodiment, the user can watch the moving image accumulated in the moving image DB 12b by the server apparatus 1, by using the terminal device 3. The terminal device 3 according to the present embodiment displays, for example, a search screen for searching for a moving image stored in the moving image DB 12b of the server apparatus 1 on the display unit 34, and receives an input of search conditions related to a tool and a work target from the user. Although not illustrated, for example, a text box for receiving a text input is provided on the search screen, and the user can input a character string serving as a search condition, for example, a tool name, a work target name, and the like in the text box using the operation unit 35 of the terminal device 3. In the present embodiment, two text boxes are provided on the search screen. One of the text boxes is used for inputting a search condition related to a tool, and the other text box is used for inputting a search condition related to a work target. The terminal device 3 acquires the search condition related to the tool and the search condition related to the work target input to the text boxes, transmits the acquired search conditions to the server apparatus 1, and requests the server apparatus 1 to search for a moving image.

In response to this request, the server apparatus 1 extracts a moving image or a digest moving image corresponding to the search conditions from the moving image DB 12b, and transmits information on one or a plurality of moving images as a search result to the terminal device 3 that has issued the request. The server apparatus 1 extracts the moving image and the digest moving image corresponding to the search conditions based on the tool information and the work target information stored in association with the moving image and the digest moving image in the moving image DB 12b. The terminal device 3, which has received the search result from the server apparatus 1, displays a list of moving images corresponding to the search conditions and the like on the display unit 34 based on this search result. Although not illustrated, in this processing, the terminal device 3 displays a list of information such as the title of the moving image, the capturing date and time, and the running time (play time) of the moving image. In the present embodiment, the list of search results displayed by the terminal device 3 can include names, images, or the like of a tool and a work target appearing in each moving image.

The terminal device 3 receives selection of a moving image to be displayed (played) from the list of moving images corresponding to the search conditions, and requests the server apparatus 1 to transmit the selected moving image. In response to this request, the server apparatus 1 reads the moving image from the moving image DB 12b, and transmits the moving image to the terminal device 3 that has issued the request. In this processing, the server apparatus 1 transmits the tool information and the work target information in the moving image DB 12b associated with the moving image to be transmitted, to the terminal device 3 together with the moving image. Based on the moving image, the tool information, the work target information, and the like received from the server apparatus 1, the terminal device 3 executes processing of displaying these. In the present embodiment, the server apparatus 1 transmits the digest moving image in response to the transmission request, but the present disclosure is not limited thereto, and for example, the original moving image may be transmitted, or for example, it may be possible for the user to select whether to request the transmission of the original moving image or the digest moving image.

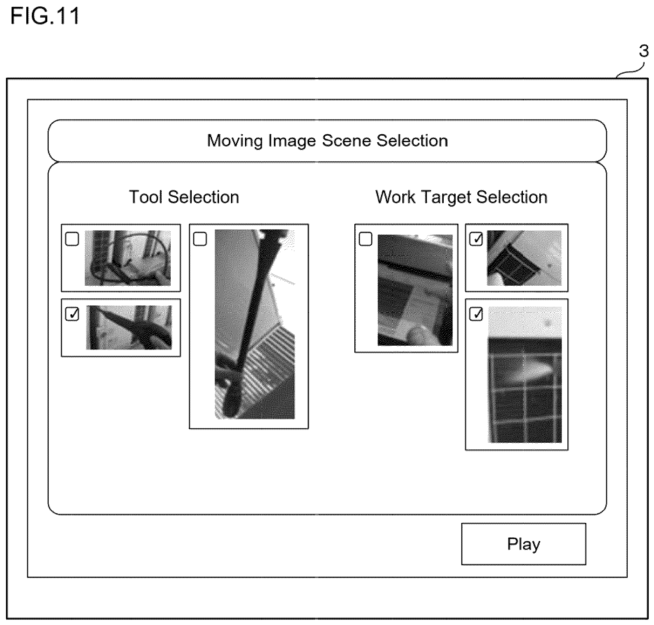

Fig. 11 is a schematic view illustrating an example of a scene selection screen of a moving image provided by the terminal device 3. The terminal device 3 displays the illustrated scene selection screen on the display unit 34, for example, before playing the moving image. In the illustrated scene selection screen, a title region provided with a character string "moving image scene selection" is provided in the uppermost part, and a tool selection region and a work target selection region are provided side by side below the title region. The tool selection region and the work target selection region on this screen are for receiving selection of a scene in the moving image to be played.

Based on the tool information received from the server apparatus 1 together with the moving image, the terminal device 3 displays images of one or a plurality of tools captured in the moving image in a tile manner in the tool selection region. The image of each tool is provided with a check box for receiving selection of the tool. In the present embodiment, it is assumed that the images of the tools to be displayed in the tool selection region are extracted from the moving image and stored in the moving image DB 12b as the tool information in advance, and transmitted from the server apparatus 1 to the terminal device 3 together with the moving image. In the illustrated example, only the images of the tools and the check boxes are displayed as a set. Alternatively, for example, a character string indicating the name, the type, or the like of each tool, the time at which each tool appears, or the like may be further displayed.

In addition, the terminal device 3 displays images of one or a plurality of work targets captured in the moving image in a tile manner in the work target selection region based on the work region information received from the server apparatus 1 together with the moving image. The image of each work target is provided with a check box for receiving selection of the work target. In the present embodiment, it is assumed that the image of the work target displayed in the work target selection region is extracted from the moving image and stored in the moving image DB 12b as work target information in advance, and transmitted from the server apparatus 1 to the terminal device 3 together with the moving image. In the illustrated example, only the image of the work targets and the check boxes are displayed as a set. Alternatively, for example, a character string indicating the name, the type, or the like of each work target, the time at which each work target appears, or the like may be further displayed.

In the present embodiment, images extracted from the moving image captured by the camera 103 are used as the images of the tool and the work target displayed in the tool selection region and the work target selection region. When the tool and the work target are detected in the moving image, the server apparatus 1 extracts the images of the tool and the work target detected, and stores the images in association with the type, the name, or the like of the tool and the work target. In the present embodiment, the images of the tool and the work target extracted from the moving image are displayed, but the present disclosure is not limited thereto. For example, an image prepared in advance for each type of tool may be displayed, or only a character string or the like may be displayed without displaying an image.

On the scene selection screen, the user can set a condition for designating a scene he or she wants to watch in the moving image. The user can set a desired tool or work target as a scene designation condition by performing an operation of checking a checkbox corresponding to the tool or work target. The user can select a plurality of tools or work targets, and can select no tool or work target. A button labeled "play" is provided below the tool selection region and the work target selection region. The user performs an operation of checking the check boxes in the tool selection region and the work target selection region, and operates the play button, thereby causing the terminal device 3 to display a moving image corresponding to the set scene designation.

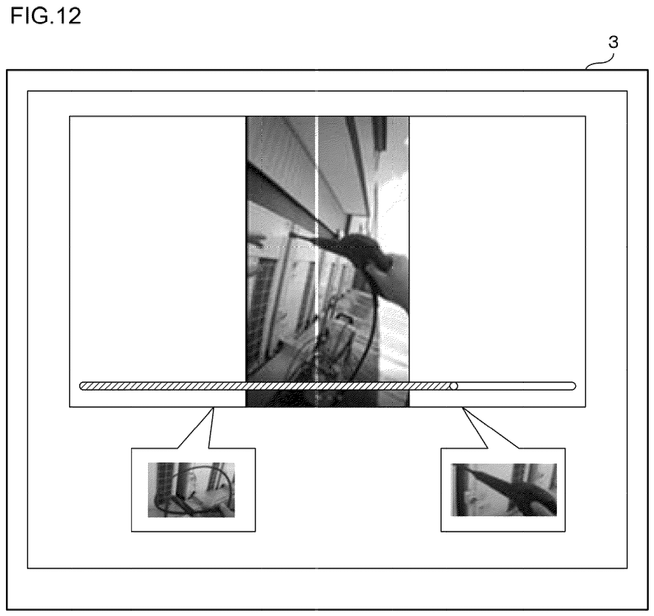

Fig. 12 is a schematic view illustrating a display example of a moving image by the terminal device 3. The terminal device 3 displays the moving image received from the server apparatus 1 at the upper center of the screen of the display unit 34. In this processing, the terminal device 3 plays a moving image in a scene in which the tool and the work target selected on the screen illustrated in Fig. 11 are captured. When there are a plurality of relevant scenes, the terminal device 3 may preferentially play a scene that appears at the earliest timing in the moving image, for example. In a case where no tool or work target is selected on the scene selection screen, the terminal device 3 may play the moving image from the top, for example.

In addition, the terminal device 3 displays a progress bar indicating a running time below the moving image, and displays on the progress bar, a timing at which the tool or the work target appears in the moving image. In this example, a balloon including an image of a tool or a work target is used to indicate a temporal position of a scene in which the tool or the work target appears, on the progress bar. The terminal device 3 displays the timing using a balloon for the tool and the work target selected on the scene selection screen. For example, when a click operation, a touch operation, or the like on the balloon is received, the terminal device 3 plays the moving image from a scene corresponding to the balloon on which the operation is received. Note that the method of displaying a moving image as illustrated in Fig. 12 is merely an example, and is not limiting. The terminal device 3 may display a moving image using any method.

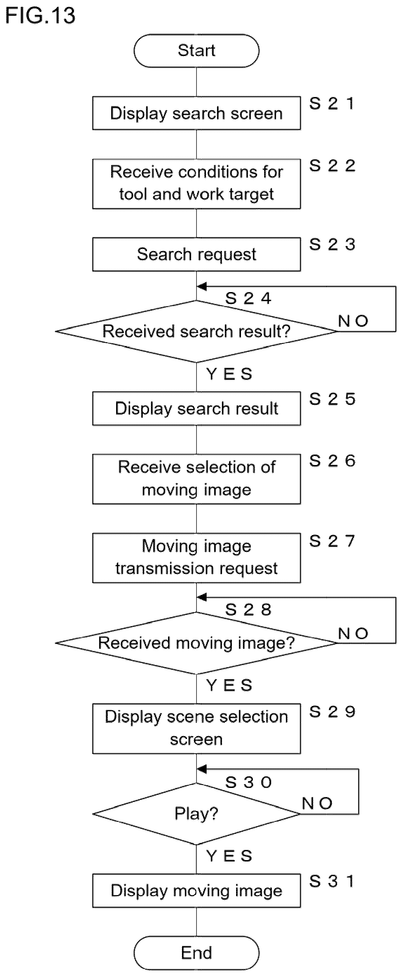

Fig. 13 is a flowchart illustrating a procedure of processing of searching for and displaying a moving image performed by the terminal device 3 according to the present embodiment. The display processing unit 31b of the control unit 31 of the terminal device 3 according to the present embodiment displays a search screen for searching for a moving image on the display unit 34 (step S21). The search processing unit 31a of the control unit 31 receives search conditions related to tools and work targets input by the user on the search screen (step S22). A search condition for only one of the tool and the work target may be received. The search processing unit 31a issues a search request including information on the received search conditions (that is, input information on the tool and the work target) to the server apparatus 1 (step S23).

The display processing unit 31b determines whether a search result transmitted by the server apparatus 1 is received as a response to the search request (step S24). When the search result is not received (S24: NO), the display processing unit 31b waits until the search result is received. When the search result is received (S24: YES), the display processing unit 31b executes processing such as displaying the received search result, for example, displaying a list of information on the moving image corresponding to the search conditions (step S25). The search processing unit 31a receives selection of a moving image to be displayed (played) from the user based on the displayed search result (step S26). The search processing unit 31a issues a transmission request for a moving image including information on the selected moving image to the server apparatus 1 (step S27).

The display processing unit 31b determines whether a moving image transmitted by the server apparatus 1 has been received as a response to the moving image transmission request (step S28). When the moving image is not received (S28: NO), the display processing unit 31b waits until the moving image is received. When the moving image is received (S28: YES), the display processing unit 31b displays the scene selection screen (see Fig. 11) on the display unit 34 based on the tool information and the work target information received from the server apparatus 1 together with the moving image (step S29). The display processing unit 31b determines whether the play button provided on the scene selection screen is operated (step S30). When the play button is not operated (S30: NO), the display processing unit 31b waits until the play button is operated. When the play button is operated (S30: YES), the display processing unit 31b plays the moving image received from the server apparatus 1 from the scene selected on the scene selection screen and displays the moving image on the display unit 34 (step S31), and ends the processing.

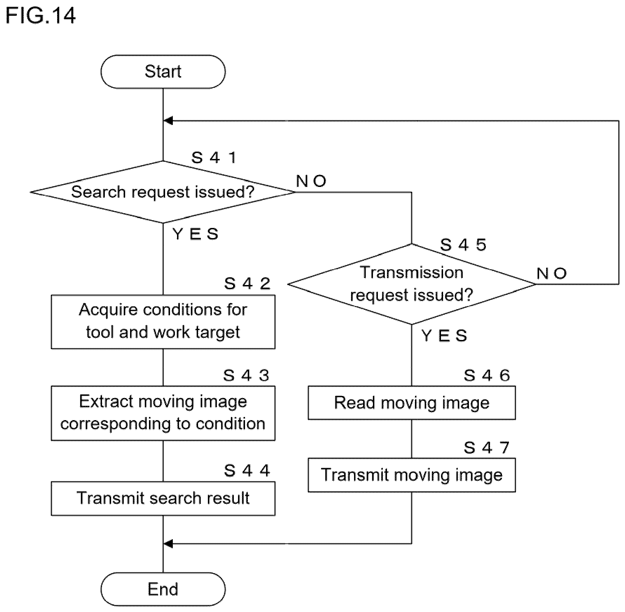

Fig. 14 is a flowchart illustrating a procedure of processing for searching for and displaying a moving image executed by the server apparatus 1 according to the present embodiment. The DB processing unit 11e of the control unit 11 of the server apparatus 1 according to the present embodiment determines whether a search request for a moving image stored in the moving image DB 12b is received from the terminal device 3 (step S41). When the search request is received (S41: YES), the DB processing unit 11e acquires the search conditions for the tool and work target included in the search request (step S42). The DB processing unit 11e extracts a moving image corresponding to the acquired search conditions from the moving image DB 12b (step S43). The DB processing unit 11e transmits information on one or a plurality of moving images extracted in step S43, for example, information such as the capturing date and time, the title, or a thumbnail image of the moving image to the terminal device 3 that has issued the request as a search result (step S44), and ends the processing.

When the search request is not received from the terminal device 3 (S41: NO), the DB processing unit 11e determines whether a transmission request for a moving image is received from the terminal device 3 (step S45). When the transmission request is not received (S45: NO), the DB processing unit 11e returns the processing to step S41. When the transmission request is received (S45: YES), the DB processing unit 11e reads the moving image requested to be transmitted from the moving image DB 12b (step S46). The DB processing unit 11e transmits the read moving image as well as the tool information and the work target information related to the moving image, to the terminal device 3 that has issued the request (step S47), and ends the processing.

### <Summary>

In the information processing system according to the present embodiment having the above configuration, the server apparatus 1 acquires a first condition related to a tool used for work such as repair or installation and a second condition related to a work target via the terminal device 3, extracts information on a corresponding moving image from the moving image DB 12b based on these search conditions, and transmits (outputs) the information to the terminal device 3 as a search result. In response to a request for transmission of a moving image from the terminal device 3 based on the search result, the server apparatus 1 reads the corresponding moving image from the moving image DB 12b and transmits (outputs) the moving image to the terminal device 3. Thus, the information processing system according to the present embodiment can provide the user with the moving image obtained by capturing the work such as repair or installation accumulated in the moving image DB 12b in accordance with the conditions of the tool and the work target, and can be expected to assist handling of the moving image by the user.

Further, in the information processing system according to the present embodiment, the terminal device 3 displays the scene selection screen before displaying the moving image, and displays the images of the tool and the work target in a tile manner as options on the scene selection screen. The terminal device 3 acquires the condition (first condition) for the tool and the condition (second condition) for the work target related to the scene to be displayed based on the selected option. Thus, the information processing system according to the present embodiment can be expected to facilitate condition input by the user.

Further, in the information processing system according to the present embodiment, the moving image is played and displayed from the scene designated based on the conditions related to the tool and the work target acquired on the scene selection screen. Thus, in the information processing system according to the present embodiment, the user can easily select a desired scene and watch a moving image.

In addition, in the information processing system according to the present embodiment, the server apparatus 1 detects a tool used by the worker from a moving image obtained by the camera 103 capturing work such as installation or repair for the air conditioner unit 101, detects a work target for repair, installation, or the like, and stores information on the tool and the work target detected and the moving image in the moving image DB 12b in association with each other. Thus, in the information processing system according to the present embodiment, a moving image can be provided based on the tool and the work target.

In the information processing system according to the present embodiment, the server apparatus 1 detects a hand of the worker in the moving image captured by the camera 103, and detects a tool based on the detected hand. In this processing, the server apparatus 1 detects a moving portion in the moving image, and sets a portion obtained by excluding a portion of the hand from the moving portion as a tool portion. Thus, the information processing system according to the present embodiment can be expected to accurately detect the tool used by the worker in the moving image captured by the camera 103.

In addition, in the information processing system according to the present embodiment, the position of the work target is calculated based on the positions of the fingertips of the hand, the center position of the plurality of fingertips, the portion of the hand, and the portion of the tool detected by the server apparatus 1. When the hand is detected but the tool is not detected, the server apparatus 1 calculates the position of the work target based on the positions of the fingertips, the center position of the plurality of fingertips, and the portion of the hand. The server apparatus 1 detects the work target in the moving image based on the position of the work target calculated for the plurality of frames in the moving image. Thus, the information processing system according to the present embodiment can be expected to accurately detect a work target in the moving image captured by the camera 103.

In the information processing system according to the present embodiment, the server apparatus 1 generates a digest moving image from the moving image captured by the camera 103 based on the detection results of the tool, the work target, and the like, and stores the digest moving image in the moving image DB 12b, and stores the information on the tool and the work target captured in the digest moving image in the moving image DB 12b as the search information. Thus, the information processing system according to the present embodiment can provide a digest moving image obtained by extracting a portion that is highly likely to be useful to the user from a moving image with a long running time.

In the present embodiment, the information processing system handles a moving image of installation, repair, or the like for the air conditioner unit 101 captured by the camera 103. However, the present disclosure is not limited thereto, and the information processing system may handle a moving image of installation, repair, or the like for equipment different from the air conditioner unit 101. In addition, the installation or repair for the equipment may include work performed before and after the installation, before and after the repair, or the like, for example, cleaning, maintenance, or the like for the equipment. In the present embodiment, the search conditions for both the tool and the work target are input by the user for searching for a moving image. However, the present disclosure is not limited thereto. The user may input the search condition for only one of the tool and the work target, and the server apparatus 1 may extract the corresponding moving image from the moving image DB 12b in accordance with the search condition for at least one of the tool and the work target. Further, in the present embodiment, the server apparatus 1 generates a digest moving image from a moving image captured by camera 103, but the present disclosure is not limited thereto, and a digest moving image may not be generated.

### [Second embodiment]

### <System overview>

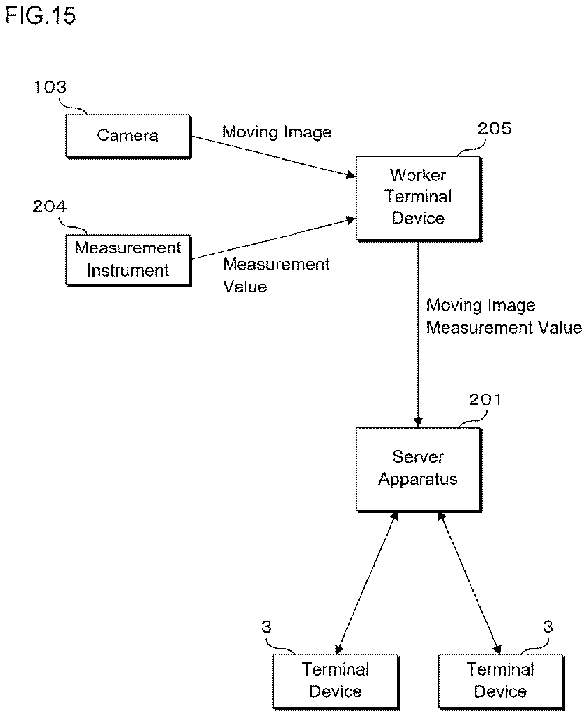

Fig. 15 is a schematic view for explaining an overview of an information processing system according to a second embodiment. In the information processing system according to the second embodiment, a server apparatus 201 detects a measurement instrument 204 such as a thermometer or a voltmeter as a tool from a moving image captured by the camera 103 mounted on the wearable device worn by the worker 102 for example, acquires a measurement value measured by the measurement instrument 204, and stores the measurement value in a database.

In the information processing system according to the second embodiment, the worker 102 performs work while carrying a worker terminal device 205. The camera 103 and the measurement instrument 204 are connected to the worker terminal device 205 in a wired or wireless manner. The worker terminal device 205 continuously acquires information such as a moving image captured by the camera 103 and a measurement value measured by the measurement instrument 204, and transmits the acquired information to the server apparatus 201. As the worker terminal device 205, for example, an information processing apparatus such as a smartphone, a tablet terminal device, or a PC may be used. In the second embodiment, the worker terminal device 205 mediates the transmission and reception of information between the camera 103 and the measurement instrument 204, and the server apparatus 201. However, the present disclosure is not limited thereto, and the camera 103 and the measurement instrument 204 may directly transmit information to the server apparatus 201.

The server apparatus 201 according to the second embodiment receives the information on the moving image and the measurement value transmitted from the worker terminal device 205, and detects the tool (the measurement instrument 204) and the work target (the air conditioner unit 101) from the moving image, similarly to the server apparatus 1 according to the first embodiment. The server apparatus 201 according to the second embodiment stores the moving image captured by the camera 103 or the digest moving image thereof and the measurement value measured by the measurement instrument 204 in the database in association with the information such as the identification information or the instrument name of the measurement instrument 204 detected from the moving image and the information such as the identification information or the work details of the work target. In the information processing system according to the second embodiment, the moving image and the measurement value are stored in the database in association with the information on the tool and the work target. However, the present disclosure is not limited thereto, and a configuration in which the moving image is not stored in the database may be employed.

In addition, the terminal device 3 can receive an input of a first search condition related to a tool and a second search condition related to a work target from the user and request the server apparatus 201 to transmit information on a moving image and a measurement value corresponding to the received search conditions. Based on the request from the terminal device 3, the server apparatus 201 reads the moving image and the measurement value stored in the database, and transmits the read information to the terminal device 3 that has issued the request. The terminal device 3 plays and displays the moving image received from the server apparatus 201, and displays the measurement value received from the server apparatus 201 together with the moving image.

In the information processing system according to the present embodiment, the measurement by the measurement instrument 204 and the transmission of the measurement result are continuously performed, for example, repeatedly performed at a predetermined interval. The server apparatus 201 does not store all of the plurality of measurement results of the measurement instrument 204 obtained in time series in the database, but stores in the database, a representative value obtained by the measurement performed at a time point when the value of the temperature, the voltage, or the like measured by the measurement instrument 204 is stabilized.

The server apparatus 201 according to the second embodiment detects which part of the air conditioner unit 101 is measured by the measurement instrument 204 based on, for example, the shape, orientation, and the like of the air conditioner unit 101 captured in the moving image. For example, the server apparatus 201 is provided in advance with information on a position at which an air outlet, an air inlet, or the like is provided with respect to the entire air conditioner unit 101, and detects which of the temperatures of the air outlet and the air inlet is measured by a thermometer as the measurement instrument 204. That is, the server apparatus 201 can not only detect the type of the equipment as the work target, but can also detect a more detailed measurement point related to the equipment as the work target. The server apparatus 201 stores a detailed measurement point of the air conditioner unit 101 as the work target in association with a measurement result in the database.

In addition, the server apparatus 201 according to the second embodiment determines whether the measurement using the measurement instrument 204 has been correctly performed based on the positional relationship, the distance, or the like between the work target (the air conditioner unit 101 or the detailed measurement point thereof) detected in the moving image and the measurement instrument 204 detected in the moving image. For example, the server apparatus 201 stores a condition of a correct measurement position for each type of the measurement instrument 204, and can determine whether the measurement is correct based on whether the positional relationship, the distance, or the like calculated from the moving image satisfies this condition. When it is determined that the measurement is not performed correctly, the server apparatus 201 does not store the measurement result in the database, or stores the measurement result with information indicating that the measurement is not performed correctly.

Further, in the information processing system according to the present embodiment, the worker can measure a plurality of items for the work target using a plurality of the measurement instruments 204. For example, the worker measures the voltage value at a predetermined point of a circuit of the air conditioner unit 101 using a voltmeter, and measures the resistance value of a resistor using a tester. In this case, the server apparatus 201 acquires two measurement results obtained by the two measurement instruments 204, and stores the measurement results in the database together with a label or the like for distinction indicating which measurement result is obtained by which measurement instrument 204 or which measurement result is obtained by measuring which part of the work target and the like.

### <Apparatus configuration>

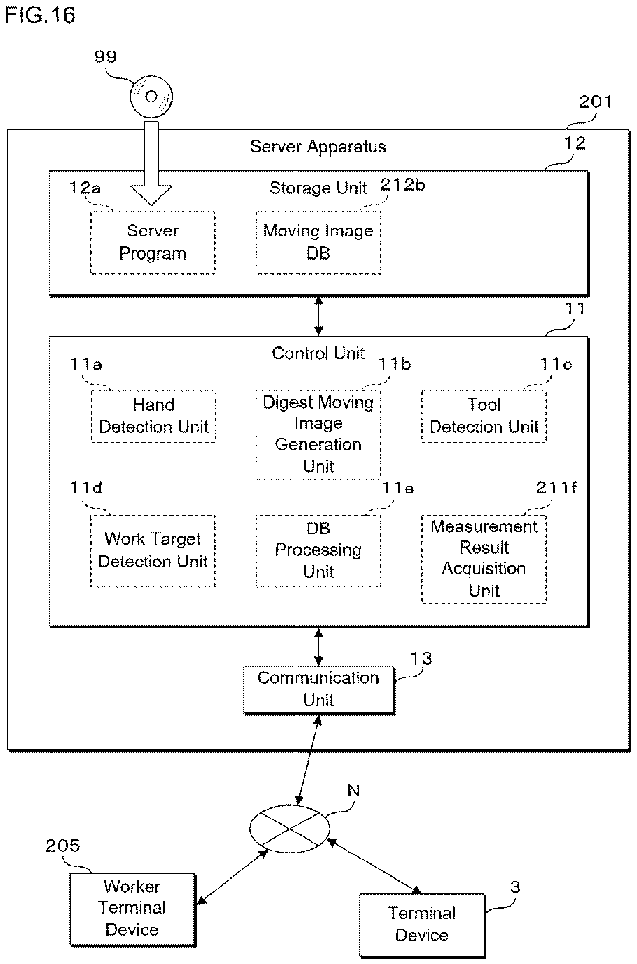

Fig. 16 is a block diagram illustrating a configuration of the server apparatus 201 according to the second embodiment. The server apparatus 201 according to the second embodiment includes the control unit 11, the storage unit (storage) 12, the communication unit (transceiver) 13, and the like. The hardware configuration of the control unit 11, the storage unit 12, the communication unit 13, and the like included in the server apparatus 201 according to the second embodiment is the same as those of the server apparatus 1 according to the first embodiment, and thus a detailed description thereof will be omitted.

A moving image DB 212b provided in the storage unit 12 of the server apparatus 201 according to the second embodiment stores information such as the moving image captured by the camera 103, the result of the measurement by the measurement instrument 204, the tool (measurement instrument 204) detected in the moving image, and the work target detected in the moving image in association with each other.

In addition, in the server apparatus 201 according to the second embodiment, the control unit 11 reads and executes the server program 12a stored in the storage unit 12, to implement the hand detection unit 11a, the digest moving image generation unit 11b, the tool detection unit 11c, the work target detection unit 11d, the DB processing unit 11e, a measurement result acquisition unit 211f, and the like as software functional parts in the control unit 11.

The hand detection unit 11a, the digest moving image generation unit 11b, the tool detection unit 11c, the work target detection unit 11d, and the DB processing unit 11e of the server apparatus 201 according to the second embodiment are functional blocks that perform the same processing as the hand detection unit 11a, the digest moving image generation unit 11b, the tool detection unit 11c, the work target detection unit 11d, and the DB processing unit 11e of the server apparatus 1 according to the first embodiment, and thus a detailed description thereof is omitted.

However, while the tool detection unit 11c detects a portion obtained by excluding the image region of the hand from the image region in which the moving object appears in the moving image as the tool in the first embodiment, the tool detection unit 11c of the server apparatus 201 according to the second embodiment may detect the tool (the measurement instrument 204) using a different method. The tool detection unit 11c according to the second embodiment may detect the tool in the moving image using, for example, a learning model for which machine learning has been performed in advance so as to detect the tool in the image.

Similarly, while the work target detection unit 11d detects the work target by aggregating the work points of the hand or tool detected in the moving image in the first embodiment, the work target detection unit 11d of the server apparatus 201 according to the second embodiment may detect the work target using a different method. The work target detection unit 11d according to the second embodiment may detect a work target in a moving image using, for example, a learning model for which machine learning has been performed in advance so as to detect the air conditioner unit 101 that can be a work target in an image.

The tool detection unit 11c and the work target detection unit 11d of the server apparatus 1 according to the first embodiment may also detect a tool and a work target using a learning model for which machine learning has been performed in advance.

The measurement result acquisition unit 211f of the server apparatus 201 according to the second embodiment executes processing of acquiring the result of the measurement of the temperature, the voltage, or the like by the measurement instrument 204 from the worker terminal device 205. The measurement result acquisition unit 211f stores the measurement result acquired from the worker terminal device 205 in the moving image DB 212b of the storage unit 12.

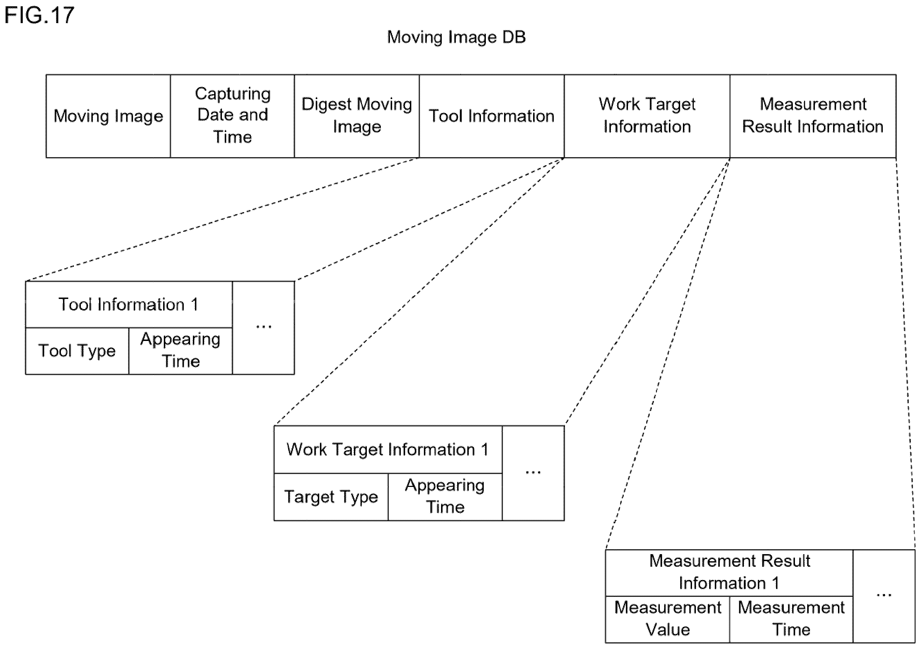

Fig. 17 is a schematic view for explaining a configuration example of the moving image DB 212b according to the second embodiment. In the moving image DB 212b of the server apparatus 201 according to the second embodiment, "moving image", "capturing date and time", "digest moving image", "tool information", "work target information", "measurement result information", and the like are stored in association with each other. Note that information such as "moving image", "capturing date and time", "digest moving image", "tool information", and "work target information" stored in the moving image DB 212b according to the second embodiment is the same as those in the moving image DB 12b according to the first embodiment, and thus a detailed description thereof will be omitted.

The "measurement result information" in the moving image DB 212b is information on the result of the measurement of a temperature, a voltage, or the like for a work target such as the air conditioner unit 101, by the measurement instrument 204. As the "measurement result information", for example, a plurality of sets of "measurement value" and "measurement time" are stored. The "measurement value" is a value such as a temperature or a voltage measured by the measurement instrument 204. In addition, the "measurement value" may include not only a numerical value such as a temperature or a voltage but also information indicating that the numerical value is of which type, for example, a unit of the numerical value such as [°C] or [V]. The "measurement time" is a time during which the "measurement value" is measured by the measurement instrument 204, and may be information indicating one time point such as, for example, what hour and what minute, or may be information indicating a time period such as, for example, from what hour and what minute to what hour and what minute.

Based on the correspondence among the "appearing time" included in the "tool information", the "appearing time" included in the "work target information", and the "measurement time" included in the "measurement result information" in the moving image DB 212b, the server apparatus 201 can determine which work target is measured by which measurement instrument 204 and which measurement result is obtained.

In the information processing system according to the second embodiment, the information stored in the database by the server apparatus 201 may not include the "moving image", the "digest moving image", and the like. The database included in the server apparatus 201 according to the second embodiment may be, for example, a database that stores "capturing date and time", "tool information", "work target information", and "measurement result information" in association with each other.

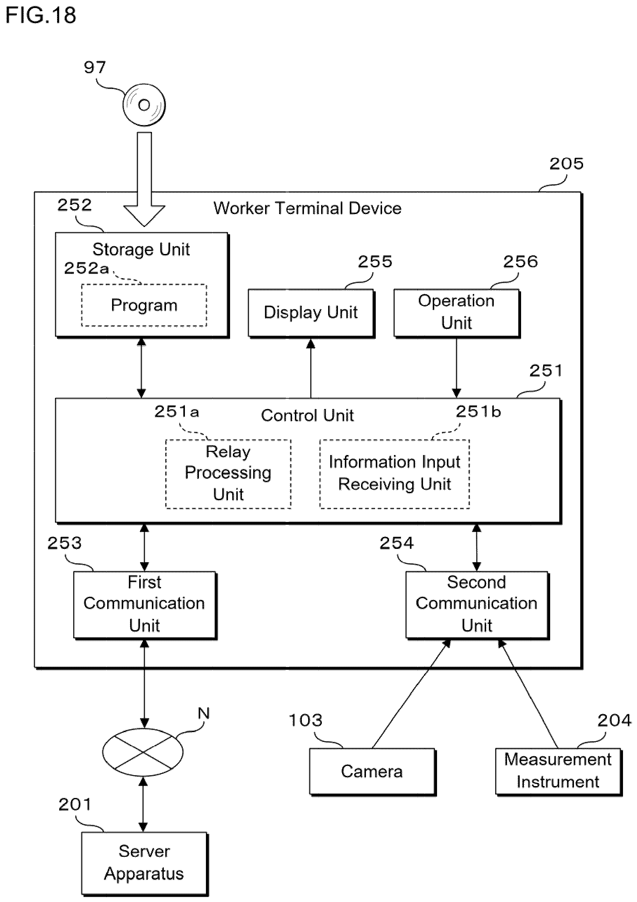

Fig. 18 is a block diagram illustrating a configuration of the worker terminal device 205 according to the second embodiment. The worker terminal device 205 according to the second embodiment includes a control unit 251, a storage unit 252, a first communication unit 253, a second communication unit 254, a display unit 255, an operation unit 256, and the like. The worker terminal device 205 is a device used by a worker who performs work such as installation or repair for the air conditioner unit 101, for example, and may be configured using an information processing apparatus such as a smartphone, a tablet terminal device, or a personal computer, for example.

The control unit 251 is configured using a calculation processing device such as a CPU or an MPU, a ROM, and the like. By reading and executing a program 252a stored in the storage unit 252, the control unit 251 performs processing such as processing of transmitting information such as the moving image captured by the camera 103 and the measurement result of the measurement instrument 204 to the server apparatus 201 and processing of receiving an input of information on the work target from the user when the work target cannot be detected in the moving image.

The storage unit 252 is configured using, for example, a nonvolatile memory element such as a flash memory and the like or a storage device such as a hard disk. The storage unit 252 stores various types of programs to be executed by the control unit 251 and various types of data required for processing by the control unit 251. In the present embodiment, the storage unit 252 stores the program 252a to be executed by the control unit 251. In the present embodiment, the program 252a is distributed by a remote server apparatus or the like, and the worker terminal device 205 acquires the program 252a through communication and stores the program 252a in the storage unit 252. However, the program 252a may be written in the storage unit 252 at the manufacturing stage of the worker terminal device 205, for example. For example, the worker terminal device 205 may read the program 252a recorded in a recording medium 97 such as a memory card or an optical disc and store the program 252a in the storage unit 252. For example, a writing device may read the program 252a recorded in the recording medium 97 and write the program in the storage unit 252 of the worker terminal device 205. The program 252a may be provided in a form of distribution via a network, or may be provided in a form recorded in the recording medium 97.

The first communication unit 253 communicates with various devices via the network N including a mobile phone communication network, a wireless LAN, the Internet, and the like. In the second embodiment, the first communication unit 253 communicates with the server apparatus 201 via the network N. The first communication unit 253 transmits data provided from the control unit 251 to another device, and provides data received from another device to the control unit 251.

The second communication unit 254 performs wired or wireless communication with devices such as the wearable device provided with the camera 103 and the measurement instrument 204. In the case of wireless communication, the second communication unit 254 can perform communication conforming to, for example, a standard such as Bluetooth (registered trademark). The second communication unit 254 receives information such as a moving image transmitted by the camera 103 and a measurement value of the measurement instrument 204, and provides the information to the control unit 251.

The display unit 255 is configured using a liquid crystal display or the like, and displays various images, characters, and the like based on the processing performed by the control unit 251. The operation unit 256 receives a user operation and notifies the control unit 251 of the received operation. For example, the operation unit 256 receives a user operation through an input device such as a mechanical button or a touch panel provided on the surface of the display unit 255. Further, for example, the operation unit 256 may be input devices such as a mouse and a keyboard, and these input devices may be configured to be detachable from the worker terminal device 205.

Further, in the worker terminal device 205 according to the second embodiment, the control unit 251 reads and executes the program 252a stored in the storage unit 252, to implement a relay processing unit 251a, an information input receiving unit 251b, and the like as software functional parts in the control unit 251.

The relay processing unit 251a performs processing of relaying transmission and reception of information between the camera 103 and the measurement instrument 204, and the server apparatus 201. The relay processing unit 251a receives the moving image transmitted from the camera 103 through the second communication unit 254, and transmits this moving image from the first communication unit 253 to the server apparatus 201. In addition, the relay processing unit 251a receives the measurement value transmitted by the measurement instrument 204 through the second communication unit 254, and transmits this measurement value from the first communication unit 253 to the server apparatus 201.

The information input receiving unit 251b executes processing of receiving an input of information from the user through the operation unit 256 and transmitting the received information to the server apparatus 201. In the present embodiment, when the measurement target cannot be detected in the moving image in a state in which the measurement value of the measurement instrument 204 is acquired from the worker terminal device 205, the server apparatus 201 requests the worker terminal device 205 to input information on the work target. In response to the request, the information input receiving unit 251b of the worker terminal device 205 displays, for example, a message prompting an input of the work target on the display unit 255 and the like, receives information input by the worker in response to the message as information on the work target, and transmits the received information to the server apparatus 201. The server apparatus 201 receives the information on the work target transmitted from the worker terminal device 205 and stores the information in the moving image DB 212b in association with the measurement result.

### <Processing of storing measurement result>

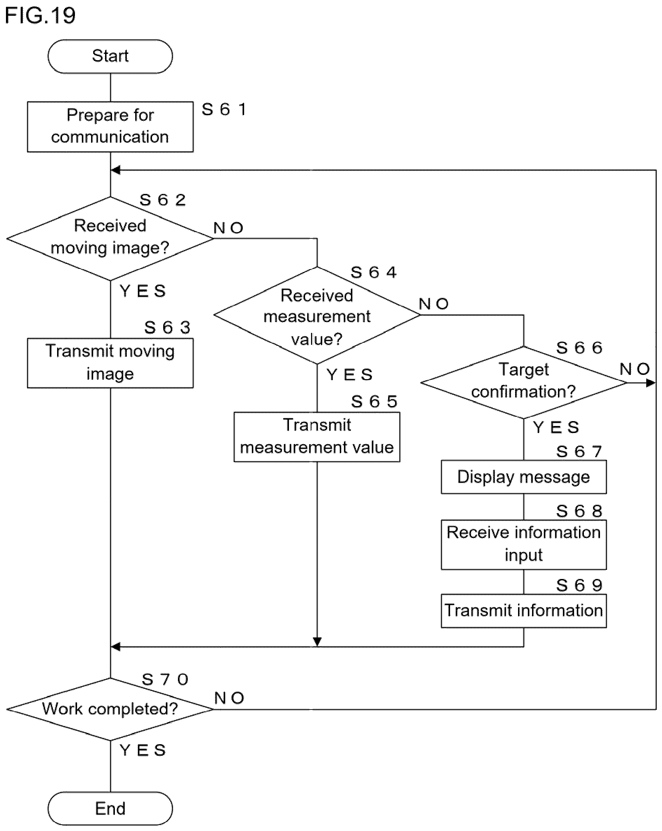

Fig. 19 is a flowchart illustrating a procedure of processing executed by the worker terminal device 205 according to the second embodiment. The control unit 251 of the worker terminal device 205 according to the second embodiment searches for a device such as the wearable device and the measurement instrument 204 as communication partners of the second communication unit 254, for example, and performs preparation for the communication by performing information exchange or the like for performing wireless communication with these devices (step S61).

The relay processing unit 251a of the control unit 251 determines whether the second communication unit 254 has received a moving image captured by the camera 103 of the wearable device (step S62). When the moving image is received (S62: YES), the relay processing unit 251a transmits this moving image from the first communication unit 253 to the server apparatus 201 (step S63), and the processing proceeds to step S70.

When the moving image captured by the camera 103 is not received (S62: NO), the relay processing unit 251a determines whether the measurement result is received from the measurement instrument 204 (step S64). When the measurement result is received (S64: YES), the relay processing unit 251a transmits this measurement result from the first communication unit 253 to the server apparatus 201 (step S65), and the processing proceeds to step S70.

When the measurement result of the measurement instrument 204 is not received (S64: NO), the information input receiving unit 251b of the control unit 251 determines whether the first communication unit 253 is provided with a request for confirmation of the work target from the server apparatus 201 (step S66). When the confirmation request of the work target is not provided (S66: NO), the control unit 251 returns the processing to step S62.

When the confirmation request of the work target is received (S66: YES), the information input receiving unit 251b displays a message prompting an input of the information on the work target on the display unit 255 (step S67). The information input receiving unit 251b receives an input of information on a work target by a user by receiving an operation of the user on the operation unit 256 (step S68). The information input receiving unit 251b transmits the information the input of which is received in step S68 from the first communication unit 253 to the server apparatus 201 (step S69), and the processing proceeds to step S70.

After transmitting the information to the server apparatus 201 in step S63, S65, or S69, the control unit 251 determines whether the repair or installation work has been completed based on, for example, whether an operation such as stopping the recording or turning off the power is performed by the worker (step S70). When the work has not been completed yet (S70: NO), the control unit 251 returns the processing to step S62. When the work has been completed (S70: YES), the control unit 251 ends the processing.

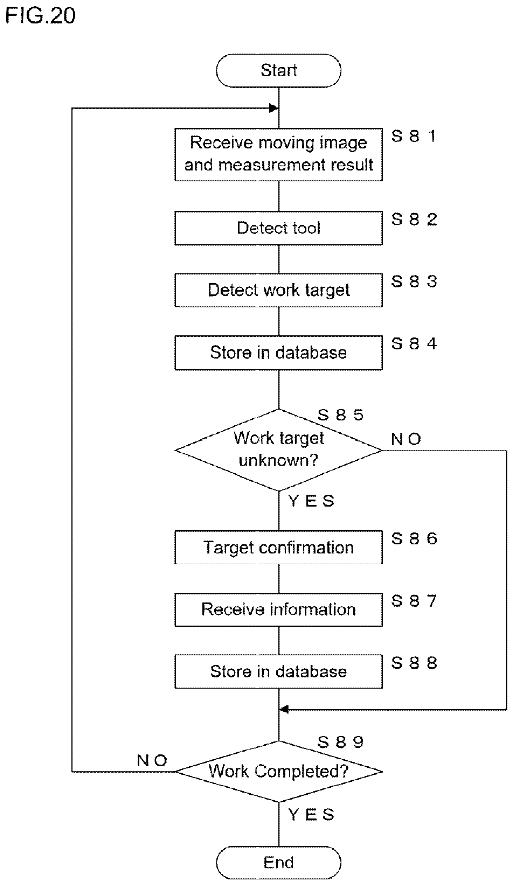

Fig. 20 is a flowchart illustrating a procedure of processing executed by the server apparatus 201 according to the second embodiment. The control unit 11 of the server apparatus 201 according to the second embodiment receives (the frames of) the moving image captured by the camera 103 and the measurement result of the measurement instrument 204, which are continuously transmitted by the worker terminal device 205, through the communication unit 13 (step S81). When the tool used by the worker is not used for performing measurement, the measurement result may not be received in step S81.

Next, the control unit 11 detects a tool used by the worker in the moving image received in step S81 (step S82). In addition, the control unit 11 detects a work target in the moving image received in step S81 (step S83). Note that the detection of the tool in step S82 and the detection of the work target in step S83 may be performed by, for example, the method described in the first embodiment, may be performed by, for example, a method using a learning model for which machine learning has been performed so as to detect the tool and the work target, or may be performed by a method other than these methods.

Next, the control unit 11 stores information such as the moving image received in step S81, the tool detected in step S82, the work target detected in step S83, and the measurement result received in step S81 in association with each other in the moving image DB 212b (step S84). When information is stored in the moving image DB 212b in step S84, it is not necessary for all of these pieces of information to be stored. For example, in such a case that the tool or the work target is not detected in the moving image, or when the measurement result of the measurement instrument 204 is not obtained, these pieces of information may not be stored in the moving image DB 212b in step S84.

The control unit 11 determines whether the work target is unknown in the information stored in the moving image DB 212b in step S84 (step S85). When the work target is known and the information on the work target is stored in the moving image DB 212b (S85: NO), the control unit 11 moves the processing to step S89.

When the work target is unknown (S85: YES), the control unit 11 confirms the work target with the worker terminal device 205 (step S86). In this processing, the control unit 11 transmits a message for requesting confirmation of the work target to the worker terminal device 205, and the worker terminal device 205 that has received this message receives an input of information on the work target from the worker and transmits the received information to the server apparatus 201. The control unit 11 of the server apparatus 201 receives the information on the work target transmitted from the worker terminal device 205 (step S87). The control unit 11 stores the information on the work target received in step S87 in the moving image DB 212b in association with the information such as the measurement result received in step S81 (step S88), and the processing proceeds to step S89.

The control unit 11 determines whether the repair or installation work has been completed, for example, depending on whether a notification or the like indicating the completion of the work has been received from the worker terminal device 205 (step S89). When the work has not been completed (S89: NO), the control unit 11 returns the processing to step S81. When the work has been completed (S89: YES), the control unit 11 ends the processing.

### <Modifications>

In the processing illustrated in the above flowchart, the server apparatus 201 receives the moving image, the measurement result, and the like from the worker terminal device 205, and simply stores these pieces of received information in the moving image DB 212b in association with each other. However, the server apparatus 201 according to the second embodiment may, for example, continuously execute processing such as calculation or determination on a plurality of measurement results obtained from the worker terminal device 205 and store the processing result in the moving image DB 212b.

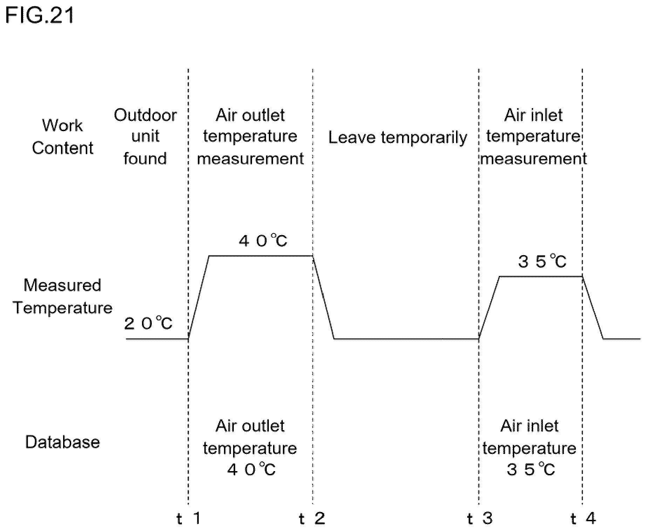

Fig. 21 is a schematic view for explaining processing executed when the server apparatus 201 stores a representative value of a measurement result in the database. The upper row of Fig. 21 illustrates the work content of the worker, the middle row illustrates a change in the temperature measured using a thermometer, and the lower row illustrates the information to be stored in the database, with the horizontal direction indicating the passage of time.

In the illustrated example, for example, a worker uses a thermometer as the measurement instrument 204 to measure the temperatures at the air outlet and the air inlet of the outdoor unit of the air conditioner unit 101. In the moving image captured by the camera 103 of the wearable device worn by the worker, for example, work contents are recorded in which the worker finds the outdoor unit as the work target, measures the temperature at the air outlet with the thermometer at a time point t1, temporarily leaves the place at a time point t2, measures the temperature at the air inlet with the thermometer at a time point t3, and ends the measurement work at a time point t4.

The thermometer held by the worker measures, for example, a room temperature of 20°C before the start of measurement, and the worker terminal device 205 transmits the measurement result to the server apparatus 201. At the subsequent time point t1, the worker performs an operation of bringing the thermometer close to the air outlet of the outdoor unit, whereby the temperature measured by the thermometer gradually rises to finally reach 40°C and be stabilized. The server apparatus 201 continuously acquires the measurement result of the temperature from the worker terminal device 205, and sets the temperature at the point when the temperature fluctuating from a stable state has become stable again, as the representative value of the measured temperatures in the period from the time point t1 to the time point t2.

In this processing, the server apparatus 201 detects a thermometer as the tool in the moving image captured by the camera 103, and detects the air outlet of the outdoor unit of the air conditioner unit 101 as the work target. In the case of this example, the server apparatus 201 not only detects the outdoor unit as the work target, but also detects which part of the outdoor unit is the target of temperature measurement. For example, the server apparatus 201 can detect each part of the outdoor unit in the moving image using a learning model for which machine learning has been performed so as to detect the parts such as the air outlet and the air inlet of the outdoor unit, and determine a detailed work target according to a positional relationship, a distance, or the like with the measurement instrument 204 detected in the moving image. For example, the server apparatus 201 may store in advance information on the positions of the air outlet, the air inlet, and the like with respect to the shape of the outdoor unit captured in the moving image (for example, the air outlet is provided at the lower right of the rectangular main body and the like), and determine a detailed work target according to the positional relationship, the distance, or the like between the outdoor unit detected as the work target in the moving image and the measurement instrument 204 with respect to the outdoor unit.

The server apparatus 201 associates the representative value 40°C selected from the plurality of measurement values obtained from the measurement instrument 204 with the information on the air outlet of the outdoor unit detected as the work target, and stores the information on the air outlet temperature 40°C as the measurement result in the database.

In the illustrated example, the temperature measured by the thermometer is gradually lowered to the room temperature 20°C because the worker has completed the temperature measurement of the air outlet at the time point t2 and temporarily left the place. Also in this case, the server apparatus 201 continuously receives the moving image and the measurement result from the worker terminal device 205, but determines that the measurement of the temperature is not performed from the moving image, and does not store the measurement result in the database. The server apparatus 201 can determine that the measurement of the temperature is not (correctly) performed, for example, by determining from the moving image that the measurement instrument 204 is not captured in the moving image or that the measurement instrument 204, the position of the work target are far from each other, and the like.

Further, in the illustrated example, at the time point t3, the worker performs an operation of bringing the thermometer close to the air inlet of the outdoor unit, whereby the temperature measured by the thermometer gradually rises to finally reach 35°C and be stabilized. The server apparatus 201 continuously acquires the measurement result of the temperature from the worker terminal device 205, and sets the temperature at the point when the temperature fluctuating from a stable state has become stable again, as the representative value of the measured temperatures in the period from the time point t3 to the time point t4. The server apparatus 201 associates the representative value 35°C with the information on the air inlet of the outdoor unit detected as the work target, and stores the information on the air inlet temperature 35°C as the measurement result in the database.

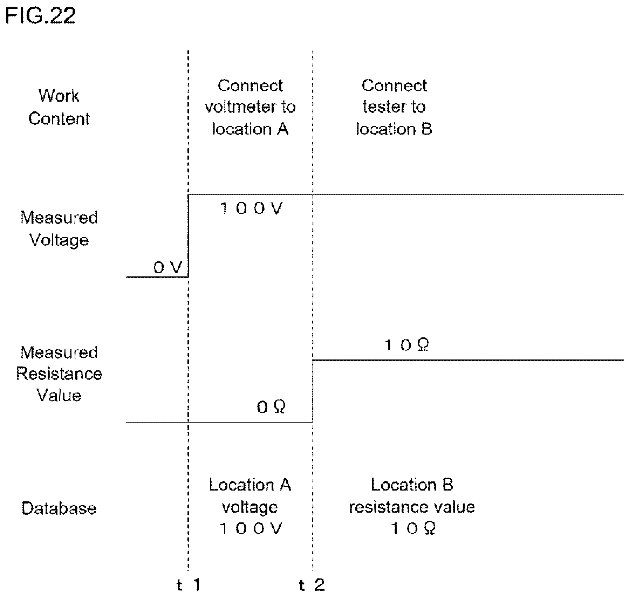

Fig. 22 is a schematic view for explaining processing executed when the server apparatus 201 stores a representative value of a measurement result in the database, and illustrates a case where the worker uses a plurality of the measurement instruments 204. In Fig. 21, the first row illustrates the work content of the worker, the second row illustrates a change in the voltage value measured using a voltmeter, the third row illustrates the resistance value measured using a tester, and the fourth row illustrates the information to be stored in the database, with the horizontal direction indicating the passage of time.

In the illustrated example, for example, the worker uses two measurement instruments 204, i.e., a voltmeter and a tester (resistance value measurement), and simultaneously performs voltage value measurement at a location A and resistance value measurement at a location B in a circuit or the like of the air conditioner unit 101. It is assumed that, in the moving image captured by the camera 103 of the wearable device worn by the worker, for example, work contents in which the worker connects the voltmeter to the location A of the air conditioner unit 101 as the work target at a time point t1, then connects the tester to the location B at a time point t2, and measures a voltage value and a resistance value are recorded.

The voltmeter held by the worker measures, for example, 0 V before the start of measurement, and the worker terminal device 205 transmits the measurement result to the server apparatus 201. At the subsequent time point t1, the worker performs an operation of connecting the voltmeter to the location A of the air conditioner unit 101, whereby the voltage value measured by the voltmeter rises from 0 V to 100 V to be stabilized. The server apparatus 201 continuously acquires the measurement result of the voltage value from the worker terminal device 205, and sets the voltage value at the point when the voltage value fluctuating from a stable state has become stable again, as the representative value of the measured voltage values in the period after the time point t1. The server apparatus 201 associates the representative value 100 V selected from the voltage values measured by the voltmeter with the information on the location A of the air conditioner unit 101 detected as the work target, and stores the information indicating the voltage 100 V at the location A as the measurement result in the database.

At the subsequent time point t2, the worker performs an operation of connecting the tester to the location B of the air conditioner unit 101, and thus the resistance value measured by the tester increases from 0 Ω to 10 Ω to be stabilized. The server apparatus 201 continuously acquires the measurement result of the resistance value from the worker terminal device 205, and sets the resistance value at the point when the resistance value fluctuating from a stable state has become stable again, as the representative value of the measured resistance values in the period after the time point t2. The server apparatus 201 associates the representative value 10 Ω selected from the resistance values measured by the tester with the information on the location B of the air conditioner unit 101 detected as the work target, and stores the information indicating the resistance value 10 Ω at the location B as the measurement result in the database.

In the present example, an example in which the worker uses the two measurement instruments 204 has been described, but the present disclosure is not limited thereto, and the worker may perform work using three or more measurement instruments 204. The worker terminal device 205 acquires measurement values from three or more measurement instruments 204 and transmits the measurement values to the server apparatus 201, and the server apparatus 201 detects the work target of each measurement instrument 204 based on the moving image and stores the work target and the measurement result in the database in association with each other.

Further, the server apparatus 201 may store the result of the measurement by the measurement instrument 204 and the information on the measurement work target in a database different from the moving image DB 212b, instead of storing them in the moving image DB 212b. As the database different from the moving image DB 212b, for example, a database that stores a history, a result, and the like of inspection for the air conditioner unit 101 may be adopted.

### <Summary>

In the information processing system according to the second embodiment having the above-described configuration, the server apparatus 201 detects the measurement instrument 204 as the tool used by the worker in the moving image. The server apparatus 201 stores the information on the tool and the work target detected and the information on the measurement result obtained by the measurement instrument 204 in association with each other in the moving image DB 212b. Accordingly, the information processing system can store and accumulate the measurement results obtained by the measurement instrument 204 together with the moving image and the information on the measurement instrument 204 and the work target. For example, in a case where the moving image is displayed in response to a search made by the user or the like, the information processing system can display the information on the measurement result at this point together with the moving image in which measurement by the measurement instrument 204 is performed.

Further, in the information processing system according to the second embodiment, when the server apparatus 201 cannot detect the work target in the moving image, an input of information on the work target from the worker is received via the worker terminal device 205, and the received information is stored in the moving image DB 212b in association with the measurement result or the like. Accordingly, the server apparatus 201 can acquire information from the worker and store the information in the moving image DB 212b even in a case where the work target cannot be detected in the moving image due to reasons such as the moving image being unclear or the air conditioner unit 101 that is the work target not being registered, for example.

In the information processing system according to the second embodiment, the server apparatus 201 continuously acquires the measurement result obtained by the measurement instrument 204 together with the moving image from the worker terminal device 205. The server apparatus 201 stores, in the moving image DB 212b, the measurement result obtained after fluctuation of a plurality of measurement results fluctuating in time series has settled, as the representative value. Thus, the server apparatus 201 does not need to store all of a large number of measurement results continuously obtained from the measurement instrument 204 in the moving image DB 212b, but may store only the representative value of the measurement results. Therefore, it is possible to suppress an increase in the amount of information stored in the moving image DB 212b.

In the information processing system according to the second embodiment, the server apparatus 201 determines whether the measurement by the measurement instrument 204 is correct in accordance with the positional relationship, the distance, or the like between the measurement instrument 204 and the work target detected in the moving image. For example, the server apparatus 201 can determine that the measurement is invalid in a case where the measurement instrument 204 is not captured in the moving image, the positions of the measurement instrument 204 and the work target are inappropriate, or the like. The server apparatus 201 stores the measurement result determined to be valid in the moving image DB 212b, and does not store the measurement result determined to be invalid in the moving image DB 212b. As a result, the server apparatus 201 can suppress unwanted measurement results from being stored in the moving image DB 212b.

While embodiments have been described above, it should be understood that various changes in mode and detail may be made without departing from the scope of the claims.

### Reference Signs List

- 1: Server apparatus (information processing apparatus, computer)
- 3: Terminal device
- 11: Control unit
- 11a: Hand detection unit
- 11b: Digest moving image generation unit
- 11c: Tool detection unit
- 11d: Work target detection unit
- 11e: DB processing unit
- 12: Storage unit
- 12a: Server program (computer program)
- 12b: Moving image DB
- 13: Communication unit
- 31: Control unit
- 31a: Search processing unit
- 31b: Display processing unit
- 32: Storage unit
- 32a: Program
- 33: Communication unit
- 34: Display unit
- 35: Operation unit
- 98, 99: Recording medium
- 101: Air conditioner unit
- 102: Worker
- 103: Camera
- 201: Server apparatus
- 204: Measurement instrument
- 205: Worker terminal device
- 211f: Measurement result acquisition unit
- 212b: Moving image DB
- 251: Control unit
- 251a: Relay processing unit
- 251b: Information input receiving unit
- 252: Storage unit
- 252a: Program
- 253: First communication unit
- 254: Second communication unit
- 255: Display unit
- 256: Operation unit
- N: Network

## Claims

1. An information processing method comprising:
acquiring a first condition related to a tool used for repair or installation work;
acquiring a second condition related to a work target; and
outputting a moving image obtained by capturing the repair or installation work or information on the moving image based on the first condition and the second condition
wherein a scene in the moving image identified based on the first condition or the second condition is output,
wherein a hand of a worker (102) is detected in the moving image, and
a tool used by the hand is detected based on the detected hand,
**characterized in that** a moving portion is detected in the moving image,
a portion of the tool is obtained by removing a portion of the hand from the moving portion,
a work target position is calculated based on a position of a fingertip and a center position of a plurality of fingertips as well as the portion of the hand and the portion of the tool detected and the work target is detected based on a work target position calculated for a plurality of frames in the moving image.

2. The information
processing method according to claim 1, wherein an image of one or a plurality of tools is output as an option related to the first condition and an image of one or a plurality of work targets is output as an option related to the second condition, and
the first condition and the second condition are acquired in accordance with selection of the output options.

3. The information processing method according to claim 1 or 2, wherein when the hand is detected and the tool is not detected, the work target position is calculated based on the position of the fingertip, the center position of the plurality of fingertips, and the portion of the hand detected.

4. The information processing method according to any one of claims 1 to 3, wherein a summary moving image is generated from the moving image based on the tool and the work target detected,
the summary moving image is stored in a database (12b,212b), and
information on a tool and a work target captured in the summary moving image is stored as search information in a database (12b,212b).

5. The information processing method according to claim 4, wherein the tool is a measurement instrument (204) that performs measurement related to the work target, and
information on the tool and the work target detected and information on a measurement result obtained by the tool are stored in the database (12b,212b) in association with each other, and
the information on the measurement result obtained by the tool is output based on the first condition and the second condition.

6. An information processing method comprising
detecting a tool used by a worker (102) in a moving image obtained by capturing repair or installation work;
detecting a work target of the repair or installation work in the moving image; and
storing information on the tool and the work target detected and the moving image in a database (12b,212b) in association with each other, wherein the tool is a measurement instrument (204) that performs measurement related to the work target, and
the information on the tool and the work target detected and information on a result of the measurement by the tool are stored in the database (12b,212b) in association with each other.

7. The information processing method according to claim 6, wherein an input of the information on the work target is received when the work target is unable to be detected in the moving image.

8. The information processing method according to claim 7, wherein the result of the measurement by the tool is continuously acquired together with the moving image, and
when the acquired measurement result fluctuates, the measurement result after the fluctuation has settled is stored in the database (12b,212b).

9. The information processing method according to claim 7, wherein whether the result of the measurement by the tool is valid is determined in accordance with a positional relationship between the tool and the work target detected in the moving image, and
the measurement result determined to be valid is stored in the database (12b,212b).

10. The information processing method according to any one of claims 6 to 9, wherein a moving image captured by a wearable device (103) worn by the worker (102) is acquired, and
the tool and the work target are detected in the acquired moving image.

11. A computer program (12a)comprising instructions which, when the program is executed by a computer, cause the computer (1,201) to
carry out the steps of the method of claim 1.

12. A computer program (12a) comprising instructions which, when the program is executed by a computer, cause the computer (1,201) to carry out the steps of method of claim 6.

13. An information processing apparatus (1,201) comprising a control unit (11), wherein
the control unit (11) is configured to
acquire a first condition related to a tool used for repair or installation work;
acquire a second condition related to a work target;
output a moving image obtained by capturing the repair or installation work or information on the moving image based on the first condition and the second condition
output a scene in the moving image identified based on the first condition or the second condition, detect a hand of a worker (102)in the moving image, and
detect a tool used by the hand based on the detected hand,
**characterized in that** the control unit (11) is further configured to
detect a moving portion in the moving image,
obtain a portion of the tool by removing a portion of the hand from the moving portion,
calculate a work target position based on a position of a fingertip and a center position of a plurality of fingertips as well as the portion of the hand and the portion of the tool detected and detect the work target based on a work target position calculated for a plurality of frames in the moving image.

14. An information
processing apparatus (1,201) comprising a control unit (11), wherein
the control unit (11)is configured to
detect a tool used by a worker (102) in a moving image obtained by capturing repair or installation work;
detect a work target of the repair or installation work in the moving image;
store information on the tool and the work target detected and the moving image in a database (12b,212b) in association with each other,
**characterized in that** the tool is a measurement instrument (204) that performs measurement related to the work target, and
the control unit (11) is configured to store the information on the tool and the work target detected and information on a result of the measurement by the tool in the database (12b,212b) in association with each other.

## Patentansprüche

1. Informationsverarbeitungsverfahren, umfassend:
Erfassen einer ersten Bedingung, die sich auf ein Werkzeug bezieht, das für Reparatur- oder Installationsarbeiten verwendet wird;
Erfassen einer zweiten Bedingung, die sich auf ein Arbeitsziel bezieht; und
Ausgeben eines Bewegtbilds, das durch Erfassen der Reparatur- oder Installationsarbeiten oder Informationen über das Bewegtbild erhalten wird, basierend auf der ersten Bedingung und der zweiten Bedingung,
wobei eine Szene in dem Bewegtbild, die basierend auf der ersten Bedingung oder der zweiten Bedingung identifiziert wird, ausgegeben wird,
wobei eine Hand eines Arbeiters (102) in dem Bewegtbild erfasst wird, und
ein Werkzeug, das von der Hand verwendet wird, basierend auf der erfassten Hand erfasst wird,
**dadurch gekennzeichnet, dass** ein Bewegungsabschnitt in dem Bewegtbild erfasst wird,
ein Abschnitt des Werkzeugs durch Entfernen eines Abschnitts der Hand von dem Bewegungsabschnitt erhalten wird,
eine Arbeitszielposition basierend auf einer Position einer Fingerspitze und einer Mittenposition einer Vielzahl von Fingerspitzen sowie dem Abschnitt der Hand und dem Abschnitt des Werkzeugs, die erfasst werden, berechnet wird und das Arbeitsziel basierend auf einer Arbeitszielposition, die für eine Vielzahl von Einzelbildern in dem Bewegtbild berechnet wird, erfasst wird.

2. Informationsverarbeitungsverfahren nach Anspruch 1, wobei ein Bild von einem oder einer Vielzahl von Werkzeugen als eine Option, die sich auf die erste Bedingung bezieht, ausgegeben wird und ein Bild von einem oder einer Vielzahl von Arbeitszielen als eine Option, die sich auf die zweite Bedingung bezieht, ausgegeben wird, und
die erste Bedingung und die zweite Bedingung gemäß einer Auswahl der Ausgabeoptionen erfasst werden.

3. Informationsverarbeitungsverfahren nach Anspruch 1 oder 2, wobei, wenn die Hand erfasst wird und das Werkzeug nicht erfasst wird, die Arbeitszielposition basierend auf der Position der Fingerspitze, der Mittenposition der Vielzahl von Fingerspitzen und dem Abschnitt der Hand, der erfasst wird, berechnet wird.

4. Informationsverarbeitungsverfahren nach einem der Ansprüche 1 bis 3, wobei ein zusammengefasstes Bewegtbild aus dem Bewegtbild basierend auf dem Werkzeug und dem erfassten Arbeitsziel erzeugt wird,
das zusammengefasste Bewegtbild in einer Datenbank (12b, 212b) gespeichert wird, und
Informationen über ein Werkzeug und ein Arbeitsziel, die in dem zusammengefassten Bewegtbild erfasst werden, als Suchinformationen in einer Datenbank (12b, 212b) gespeichert werden.

5. Informationsverarbeitungsverfahren nach Anspruch 4, wobei das Werkzeug ein Messinstrument (204) ist, das eine Messung in Bezug auf das Arbeitsziel durchführt, und
Informationen über das Werkzeug und das erfasste Arbeitsziel und Informationen über ein Messergebnis, das durch das Werkzeug erhalten wird, in der Datenbank (12b, 212b) in Verbindung miteinander gespeichert werden, und
die Informationen über das Messergebnis, die durch das Werkzeug erhalten werden, basierend auf der ersten Bedingung und der zweiten Bedingung ausgegeben werden.

6. Informationsverarbeitungsverfahren, umfassend:
Erfassen eines Werkzeugs, das von einem Arbeiter (102) verwendet wird, in einem Bewegtbild, das durch Erfassen von Reparatur- oder Installationsarbeiten erhalten wird;
Erfassen eines Arbeitsziels der Reparatur- oder Installationsarbeiten in dem Bewegtbild; und
Speichern von Informationen über das Werkzeug und das erfasste Arbeitsziel und das Bewegtbild in einer Datenbank (12b, 212b) in Verbindung miteinander, wobei das Werkzeug ein Messinstrument (204) ist, das eine Messung in Bezug auf das Arbeitsziel durchführt, und
die Informationen über das Werkzeug und das erfasste Arbeitsziel und Informationen über ein Ergebnis der Messung durch das Werkzeug in der Datenbank (12b, 212b) in Verbindung miteinander gespeichert werden.

7. Informationsverarbeitungsverfahren nach Anspruch 6, wobei eine Eingabe der Informationen über das Arbeitsziel empfangen wird, wenn das Arbeitsziel nicht in dem Bewegtbild erfasst werden kann.

8. Informationsverarbeitungsverfahren nach Anspruch 7, wobei das Ergebnis der Messung durch das Werkzeug kontinuierlich zusammen mit dem Bewegtbild erfasst wird, und
wenn das erfasste Messergebnis schwankt, das Messergebnis, nachdem die Schwankung eingeschwungen ist, in der Datenbank (12b, 212b) gespeichert wird.

9. Informationsverarbeitungsverfahren nach Anspruch 7, wobei gemäß einer Positionsbeziehung zwischen dem Werkzeug und dem in dem Bewegtbild erfassten Arbeitsziel bestimmt wird, ob das Ergebnis der Messung durch das Werkzeug gültig ist, und
das als gültig bestimmte Messergebnis in der Datenbank (12b, 212b) gespeichert wird.

10. Informationsverarbeitungsverfahren nach einem der Ansprüche 6 bis 9, wobei ein Bewegtbild erfasst wird, das von einer tragbaren Vorrichtung (103) erfasst wird, die von dem Arbeiter (102) getragen wird, und
das Werkzeug und das Arbeitsziel in dem erfassten Bewegtbild erfasst werden.

11. Computerprogramm (12a), umfassend Anweisungen, die, wenn das Programm von einem Computer ausgeführt wird, den Computer (1, 201) veranlassen,
die Schritte des Verfahrens nach Anspruch 1 auszuführen.

12. Computerprogramm (12a), umfassend Anweisungen, die, wenn das Programm von einem Computer ausgeführt wird, den Computer (1, 201) veranlassen, die Schritte des Verfahrens nach Anspruch 6 auszuführen.

13. Informationsverarbeitungsvorrichtung (1, 201), umfassend eine Steuereinheit (11), wobei
die Steuereinheit (11) konfiguriert ist zum
Erfassen einer ersten Bedingung, die sich auf ein Werkzeug bezieht, das für Reparatur- oder Installationsarbeiten verwendet wird;
Erfassen einer zweiten Bedingung, die sich auf ein Arbeitsziel bezieht;
Ausgeben eines Bewegtbilds, das durch Erfassen der Reparatur- oder Installationsarbeiten oder Informationen über das Bewegtbild erhalten wird, basierend auf der ersten Bedingung und der zweiten Bedingung,
Ausgeben einer Szene in dem Bewegtbild, die basierend auf der ersten Bedingung oder der zweiten Bedingung identifiziert wird,
Erfassen einer Hand eines Arbeiters (102) in dem Bewegtbild, und
Erfassen eines Werkzeugs, das von der Hand verwendet wird, basierend auf der erfassten Hand,
**dadurch gekennzeichnet, dass** die Steuereinheit (11) ferner konfiguriert ist zum Erfassen eines Bewegungsabschnitts in dem Bewegtbild,
Erhalten eines Abschnitts des Werkzeugs durch Entfernen eines Abschnitts der Hand von dem Bewegungsabschnitt,
Berechnen einer Arbeitszielposition basierend auf einer Position einer Fingerspitze und einer Mittenposition einer Vielzahl von Fingerspitzen sowie dem Abschnitt der Hand und dem Abschnitt des Werkzeugs, die erfasst werden, und Erfassen des Arbeitsziels basierend auf einer Arbeitszielposition, die für eine Vielzahl von Einzelbildern in dem Bewegtbild berechnet wird.

14. Informationsverarbeitungsvorrichtung (1, 201), umfassend eine Steuereinheit (11), wobei
die Steuereinheit (11) konfiguriert ist zum
Erfassen eines Werkzeugs, das von einem Arbeiter (102) verwendet wird, in einem Bewegtbild, das durch Erfassen von Reparatur- oder Installationsarbeiten erhalten wird;
Erfassen eines Arbeitsziels der Reparatur- oder Installationsarbeiten in dem Bewegtbild;
Speichern von Informationen über das Werkzeug und das erfasste Arbeitsziel und das Bewegtbild in einer Datenbank (12b, 212b) in Verbindung miteinander,
**dadurch gekennzeichnet, dass** das Werkzeug ein Messinstrument (204) ist, das eine Messung in Bezug auf das Arbeitsziel durchführt, und
die Steuereinheit (11) konfiguriert ist zum Speichern der Informationen über das Werkzeug und das erfasste Arbeitsziel und Informationen über ein Ergebnis der Messung durch das Werkzeug in der Datenbank (12b, 212b) in Verbindung miteinander.

## Revendications

1. Procédé de traitement d'informations consistant à :
acquérir une première condition relative à un outil utilisé pour des travaux de réparation ou d'installation ;
acquérir une deuxième condition relative à une cible de travail ; et
sortir une image en mouvement obtenue en capturant les travaux de réparation ou d'installation ou des informations sur l'image en mouvement sur la base de la première condition et de la deuxième condition
dans lequel une scène dans l'image en mouvement identifiée sur la base de la première condition ou de la deuxième condition est sortie,
dans lequel une main d'un travailleur (102) est détectée dans l'image en mouvement, et
un outil utilisé par la main est détectée sur la base de la main détectée,
**caractérisé en ce qu'**une partie en mouvement est détectée dans l'image en mouvement,
une partie de l'outil est obtenue en retirant une partie de la main de la partie en mouvement,
une position de cible de travail est calculée sur la base d'une position d'un bout de doigt et d'une position centrale d'une pluralité de bouts de doigt ainsi que la partie de la main et la partie de l'outil détectées et la cible de travail est détectée sur la base d'une position de cible de travail calculée pour une pluralité de cadres dans l'image en mouvement.

2. Procédé de traitement d'informations selon la revendication 1, dans lequel une image d'un ou de plusieurs outils est sortie ce qui est une option relative à la première condition et une image d'une ou de plusieurs cibles de travail est sortie ce qui est une option relative à la deuxième condition, et
la première condition et la deuxième condition sont acquises en fonction d'une sélection des options de sortie.

3. Procédé de traitement d'informations selon la revendication 1 ou 2, dans lequel, quand la main est détectée et que l'outil n'est pas détecté, la position de cible de travail est calculée sur la base de la position du bout de doigt, la position centrale de la pluralité de bouts de doigt et la partie de la main détectée.

4. Procédé de traitement d'informations selon l'une quelconque des revendications 1 à 3, dans lequel une image en mouvement de synthèse est générée à partir de l'image en mouvement sur la base de l'outil et de la cible de travail détectés,
l'image en mouvement de synthèse est stockée dans une base de données (12b,212b), et
des informations sur un outil et une cible de travail capturés dans l'image en mouvement de synthèse sont stockées en informations de recherche dans une base de données (12b,212b).

5. Procédé de traitement d'informations selon la revendication 4, dans lequel l'outil est un instrument de mesure (204) qui effectue une mesure relative à la cible de travail, et
des informations sur l'outil et la cible de travail détectés et des informations sur un résultat de mesure obtenu par l'outil sont stockées dans la base de données (12b,212b) en association les unes avec les autres, et
les informations sur le résultat de mesure obtenu par l'outil sont sorties sur la base de la première condition et de la deuxième condition.

6. Procédé de traitement d'informations consistant à
détecter un outil utilisé par un travailleur (102) dans une image en mouvement obtenue en capturant des travaux de réparation ou d'installation ;
détecter une cible de travail des travaux de réparation ou d'installation dans l'image en mouvement ; et
stocker des informations sur l'outil et la cible de travail détectée et l'image en mouvement dans une base de données (12b,212b) en association les unes avec les autres, dans lequel l'outil est un instrument de mesure (204) qui effectue une mesure relative à la cible de travail, et
les informations sur l'outil et la cible de travail détectée et des informations sur un résultat de la mesure par l'outil sont stockées dans la base de données (12b,212b) en association les unes avec les autres.

7. Procédé de traitement d'informations selon la revendication 6, dans lequel une entrée des informations sur la cible de travail est reçue lorsque la cible de travail ne peut pas être détectée dans l'image en mouvement.

8. Procédé de traitement d'informations selon la revendication 7, dans lequel le résultat de la mesure par l'outil est acquis en continu ainsi que l'image en mouvement, et
quand le résultat de mesure acquis fluctue, le résultat de mesure après la fin de la fluctuation est stockée dans la base de données (12b,212b).

9. Procédé de traitement d'informations selon la revendication 7, dans lequel, que le résultat de la mesure par l'outil soit valide ou non est déterminé en fonction d'une relation positionnelle entre l'outil et la cible de travail détectée dans l'image en mouvement, et
le résultat de mesure déterminé être valide est stocké dans la base de données (12b,212b).

10. Procédé de traitement d'informations selon l'une quelconque des revendications 6 à 9, dans lequel une image en mouvement capturée par un dispositif portable (103) porté par le travailleur (102) est acquis, et
l'outil et la cible de travail sont détectés dans l'image en mouvement acquise.

11. Programme informatique (12a) comprenant des instructions qui, lorsque le programme est exécuté par un ordinateur, amène l'ordinateur (1,201) à effectuer les étapes du procédé selon la revendication 1.

12. Programme informatique (12a) comprenant des instructions qui, lorsque le programme est exécuté par un ordinateur, amène l'ordinateur (1,201) à effectuer les étapes du procédé selon la revendication 6.

13. Appareil de traitement d'informations (1,201) comprenant une unité de commande (11), dans lequel
l'unité de commande (11) est configurée pour
acquérir une première condition relative à un outil utilisé pour des travaux de réparation ou d'installation ;
acquérir une deuxième condition relative à une cible de travail ;
sortir une image en mouvement obtenue en capturant les travaux de réparation ou d'installation ou des informations sur l'image en mouvement sur la base de la première condition et de la deuxième condition
sortir une scène dans l'image en mouvement identifiée sur la base de la première condition ou de la deuxième condition,
détecter une main d'un travailleur (102) dans l'image en mouvement, et
détecter un outil utilisé par la main sur la base de la main détectée,
**caractérisé en ce que** l'unité de commande (11) est configurée en outre pour
détecter une partie en mouvement dans l'image en mouvement,
obtenir une partie de l'outil en retirant une partie de la main de la partie en mouvement,
calculer une position de cible de travail sur la base d'une position d'un bout de doigt et d'une position centrale d'une pluralité de bouts de doigt ainsi que la partie de la main et la partie de l'outil détectées et
détecter la cible de travail sur la base d'une position de cible de travail calculée pour une pluralité de cadres dans l'image en mouvement.

14. Appareil de traitement d'informations (1,201) comprenant une unité de commande (11), dans lequel
l'unité de commande (11) est configurée pour
détecter un outil utilisé par un travailleur (102) dans une image en mouvement obtenue en capturant des travaux de réparation ou d'installation ;
détecter une cible de travail des travaux de réparation ou d'installation dans l'image en mouvement ;
stocker des informations sur l'outil et la cible de travail détectés et l'image en mouvement dans une base de données (12b,212b) en association les unes avec les autres,
**caractérisé en ce que** l'outil est un instrument de mesure (204) qui effectue une mesure relative à la cible de travail, et
l'unité de commande (11) est configurée pour stocker les informations sur l'outil et la cible de travail détectés et des informations sur un résultat de la mesure par l'outil dans la base de données (12b,212b) en association les unes avec les autres.
